(19) Europäisches Patentamt / European Patent Office / Office européen des brevets

(11) EP 4 738 893 A1

(12) **EUROPEAN PATENT APPLICATION**
published in accordance with Art. 153(4) EPC

(43) Date of publication:
06.05.2026 Bulletin 2026/19

(21) Application number: 24853523.9

(22) Date of filing: 24.07.2024

(51) International Patent Classification (IPC):
H04W 4/02 (2018.01)

(52) Cooperative Patent Classification (CPC):
H04L 5/00; H04W 4/02; H04W 4/029; H04W 24/08;
H04W 64/00; H04W 76/27

(86) International application number:
PCT/CN2024/107268

(87) International publication number:
WO 2025/036111 (20.02.2025 Gazette 2025/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.08.2023 CN 202311021975

(71) Applicant: Huawei Technologies Co., Ltd.
Shenzhen, Guangdong 518129 (CN)

(72) Inventors:
• YU, Yingjie
  Shenzhen, Guangdong 518129 (CN)
• HUANG, Su
  Shenzhen, Guangdong 518129 (CN)

(74) Representative: Gill Jennings & Every LLP
The Broadgate Tower
20 Primrose Street
London EC2A 2ES (GB)

(54) **POSITIONING METHOD, APPARATUS, CHIP SYSTEM, AND STORAGE MEDIUM**

(57) A positioning method and apparatus, a chip system, and a storage medium are provided, to perform more accurate positioning based on information that indicates a reflective surface of a path. In this application, a first apparatus receives at least one first signal. The first apparatus determines first information based on measurement results of a plurality of paths of the at least one first signal, where the first information includes information that indicates reflective surfaces of the plurality of paths. Because the first information may indicate the reflective surfaces of the plurality of paths, the first information may be used to assist in constructing an accurate geometric relation model between the plurality of paths, so that when a location management apparatus solves location information of a to-be-positioned apparatus based on the geometric relation model, accuracy of the location information can be improved.

FIG. 5

**Description**

CROSS-REFERENCE TO RELATED APPLICATIONS

This application claims priority to Chinese Patent Application No. 202311021975.8, filed with the China National Intellectual Property Administration on August 11, 2023 and entitled "POSITIONING METHOD AND APPARATUS, CHIP SYSTEM, AND STORAGE MEDIUM", which is incorporated herein by reference in its entirety.

TECHNICAL FIELD

This application relates to the field of positioning technologies, and in particular, to a positioning method and apparatus, a chip system, and a storage medium.

BACKGROUND

With rapid development of communication technologies, high-precision positioning is gradually determined as an important research project in a 5th generation mobile communication system (5th generation mobile networks or 5th generation wireless systems, 5G) of the 3rd generation partnership project (3rd generation partnership project, 3GPP). Scenarios of new radio (New Radio, NR) positioning mainly include: enhanced mobile broadband (enhanced mobile broadband, eMBB) outdoor, eMBB indoor, ultra-reliable low-latency communication (ultra-reliable low-latency communication, URLLC), and massive machine-type communications (massive machine-type communications, mMTC)/internet of things (internet of things, IoT). Features such as high security, scalability, high availability, and precision assurance in high-speed application are also required.

In a 3GPP standard, a plurality of positioning technologies such as a downlink time difference of arrival (downlink time of arrival, DL-TDOA), a downlink angle of departure (downlink angle of departure, DL-AOD), an uplink time difference of arrival (uplink time of arrival, UL-TDOA), an uplink angle of arrival (uplink angle of arrival, UL-AOA), and a round trip time (round trip time, RTT) are supported. Positioning technologies may be mainly classified into an uplink positioning technology, a downlink positioning technology, and an uplink/downlink positioning technology. The uplink positioning technology includes, for example, the UL-AOA. In this technology, a base station may measure a signal sent by a terminal, to obtain an angle of arrival (angle of arrival, AOA). The angle of arrival may be used to estimate a location of the terminal. The uplink/downlink positioning technology includes, for example, the RTT. In this positioning technology, a terminal and a base station each need to measure time of arrival of a received signal, to obtain an RTT through solving.

In all the positioning technologies, apparatuses that participate in positioning need to send signals, and a measurement result of the signals may be used to position a to-be-positioned apparatus. How to improve positioning accuracy becomes a problem that needs to be urgently resolved currently.

SUMMARY

Embodiments of this application provide a positioning method and apparatus, a chip system, and a storage medium, to perform more accurate positioning based on information that indicates a reflective surface of a path.

For example, a base station sends at least one positioning reference signal (positioning reference signal, PRS), and a terminal measures the at least one PRS to obtain measurement results of a plurality of paths. The terminal sends a sounding reference signal (sounding reference signal, SRS) in transmission directions of these paths. Measurement values such as angles of arrival and round trip times RTTs corresponding to the SRS and the PRS may be used to solve a location of the terminal. However, the transmission directions of the plurality of paths obtained by the terminal are not fixed. Some paths may be direct paths, some paths may be reflection paths reflected by a ground, and some paths may be reflection paths reflected by a wall. When the transmission directions of the plurality of paths are different, several relations constructed based on the plurality of paths may be different, and algorithms that are used to solve location information and that correspond to the different geometric relations may also be different.

For example, a path is a direct path, and another path is a ground reflection path. In this scenario, in a geometric relation constructed based on the plurality of paths, location information may be solved according to an algorithm #1. For another example, a path is a direct path, and another path is a wall reflection path. In this scenario, in a geometric relation constructed based on the plurality of paths, location information needs to be solved according to an algorithm #2.

However, in an existing solution, a location management apparatus cannot distinguish between the geometric relations between the plurality of paths that are measured by the UE, and therefore cannot find an accurate geometric relation model.

However, in solutions provided in this application, the location management apparatus may obtain first information, and the first information may indicate reflective surfaces of the plurality of paths. The location management apparatus may construct an accurate geometric relation model between the plurality of paths based on information about the reflective surfaces of the plurality of paths, and location information of a to-be-positioned apparatus can be more accurately solved based on the geometric relation model.

The following describes the solutions provided in this application.

**According to a first aspect,** an embodiment of this application provides a positioning method, and the method may be applied to a first apparatus. The first apparatus may be, for example, a terminal, or a unit, a module, or a chip (system) in the terminal. The first apparatus may alternatively be a network device or a chip (system) in a network.

**In** this solution, the first apparatus receives at least one first signal. The first apparatus determines first information based on measurement results of a plurality of paths of the at least one first signal, where the first information includes information that indicates transmission directions of the plurality of paths.

Because the first information may indicate the transmission directions of the plurality of paths, the first information may be used to construct an accurate geometric relation model between the plurality of paths, so that when a location management apparatus solves location information of a to-be-positioned apparatus based on the geometric relation model, accuracy of the location information can be improved.

**In** this application, the information that indicates the transmission directions of the paths may include information that indicates reflective surfaces of the paths and/or information that indicates the paths.

**In** a possible implementation, the information that indicates the reflective surfaces of the paths includes information about the reflective surface of the path in the plurality of paths. The information about the reflective surface may reflect a transmission direction of a reflection path in the plurality of paths, and then a set relation model between the paths may be constructed based on the transmission directions of the paths.

**In** a possible implementation, the information that indicates the reflective surfaces of the paths includes at least one of the following: information that indicates a type of the reflective surface of the path; information that indicates a material of the reflective surface of the path; information that indicates reflectivity of the reflective surface of the path; information that indicates reflected energy of the reflective surface of the path; information that indicates a surface feature of the reflective surface of the path; information that indicates a direction of the reflective surface of the path; or information that indicates a location of the reflective surface of the path.

The first apparatus may identify the information about the reflective surfaces through a sensor of the first apparatus and/or based on the received information about the reflection path in the plurality of paths, and then may infer the transmission directions of the paths based on the information. This solution can reduce identification difficulty of the first apparatus.

In a possible implementation, the information that indicates the paths further includes angle information of the path in the plurality of paths. The angle information of the path may more accurately indicate the transmission direction of the path.

In a possible implementation, the information that indicates the plurality of paths further includes type information of the path in the plurality of paths. The type information of the path indicates that the type of the path includes a reflection path or a direct path; or the type information of the path indicates that the type of the path includes a line of sight (line of sight, LOS) path or another path. The type information of the path is easy to identify, and the information may also indicate the transmission direction of the path. In this way, identification difficulty of the first apparatus can be reduced.

In a possible implementation, the information that indicates the plurality of paths further includes information that indicates at least one of the following: a ranking of the path in the plurality of paths when the paths of the at least one first signal are sorted based on an order of times of arrival; or a ranking of the path in the plurality of paths when the paths of the at least one first signal are sorted based on an order of receive power strengths. The information is easy to identify, and the information may also indicate the transmission direction of the path. In this way, identification difficulty of the first apparatus can be reduced.

In a possible implementation, the first information further includes at least one of the following: information that indicates the time of arrival of the path in the plurality of paths; information that indicates an angle of arrival of the path in the plurality of paths; or information that indicates a round trip time corresponding to the path in the plurality of paths.

The first information may further include some measurement results. The measurement results may be obtained by measuring the first signal (for example, a time of arrival, an angle of arrival, or a phase difference), or may be obtained by combining a measurement result of the first signal and a measurement result of another signal (for example, measurement results obtained by a third apparatus by measuring a second signal and a third signal from the first apparatus) (for example, a round trip time). These measurement results may assist the location management apparatus in positioning.

In a possible implementation, the location management apparatus and the first apparatus may be located in a same device, or may be located in different devices. When the location management apparatus and the first apparatus are located in different devices, the first apparatus sends the first information. In this way, with reference to the first information, the location management apparatus uses a more appropriate algorithm to solve location information of the first apparatus.

In a possible implementation, before the first apparatus determines the first information based on the measurement results of the plurality of paths of the at least one first signal, the first apparatus receives first configuration information, where the first configuration information includes information about a to-be-searched path. The first apparatus measures the at least one first signal based on the first configuration information, to obtain the measurement results of the plurality of paths of the at least one first signal.

The first apparatus measures the received at least one first signal, and may obtain a direct path or obtain a reflection path through measurement. The direct path is not blocked, so the direct path has strong energy, and can be easily measured by the first apparatus. However, the reflection path is difficult to measure because a propagation path is long and a path loss is large. In this implementation, the first configuration information may indicate an orientation of the to-be-searched path of the first apparatus. Therefore, the first apparatus may direct a receive beam toward a direction indicated by the first configuration information. When the orientation of the receive beam is consistent with a direction of a to-be-received path, energy received by the first apparatus on the path is large, so that accuracy of a measurement quantity of the path can be improved.

In a possible implementation, the information about the to-be-searched path includes information about a reflective surface of the to-be-searched path. In this way, when searching for a path of the first signal, the first apparatus may direct the receive beam toward the reflective surface indicated by the first configuration information, or it may be understood that the information about the reflective surface toward which the receive beam is directed matches the information about the reflective surface indicated by the first configuration information. For example, the information about the reflective surface of the path in the plurality of paths is the same as the information about the reflective surface of the to-be-searched path.

In a possible implementation, the information about the reflective surface of the to-be-searched path includes at least one of the following: information that indicates a type of the reflective surface of the to-be-searched path; information that indicates a material of the reflective surface of the to-be-searched path; information that indicates reflectivity of the reflective surface of the to-be-searched path; information that indicates reflected energy of the reflective surface of the to-be-searched path; information that indicates a surface feature of the reflective surface of the to-be-searched path; information that indicates a direction of the reflective surface of the to-be-searched path; or information that indicates a location of the reflective surface of the to-be-searched path.

The first apparatus may identify the information about the reflective surface through the sensor of the first apparatus and/or based on the received information about the reflection path in the plurality of paths. The location management apparatus sends the information about the reflective surface of the to-be-searched path, so that the first apparatus can find a reflective surface that has the same information as the reflective surface of the to-be-searched path. This solution can reduce execution difficulty on a side of the first apparatus.

In a possible implementation, the information that is about the reflective surfaces of the paths and that is indicated by the first information matches the information about the reflective surface of the to-be-searched path. For example, types or materials of the reflective surfaces indicated by the two are the same, or reflectivity, reflected energy, surface features, directions, or locations indicated by the two are close or the same.

In a possible implementation, the information about the to-be-searched path further includes angle information of the to-be-searched path. In this way, the first apparatus may match the orientation of the receive beam with the angle information of the path. For example, an angle indicated by the angle information of the path in the plurality of paths includes an angle indicated by the angle information of the to-be-searched path. This solution is easy to implement.

In a possible implementation, the information about the to-be-searched path further includes type information of the to-be-searched path, and the type information of the to-be-searched path indicates that a type of the to-be-searched path includes a direct path or a reflection path. Alternatively, the type information of the path indicates that a type of the path includes an LOS path or another path. For example, the type of the path in the plurality of paths measured by the first apparatus includes the type of the to-be-searched path. The type information of the path is easy to identify, and the information may also indicate the transmission direction of the path. In this way, identification difficulty of the first apparatus can be reduced.

In a possible implementation, the information about the to-be-searched path further includes information that indicates at least one of the following: a ranking of the to-be-searched path when the paths of the at least one first signal are sorted based on the order of the times of arrival; or the ranking of the path in the plurality of paths when the paths of the at least one first signal are sorted based on the order of the receive power strengths. The information is easy to identify, so that identification difficulty of the first apparatus can be reduced.

In a possible implementation, the first apparatus obtains second configuration information. The second configuration information indicates that the second signal is associated with a spatial relation of a first path, and the second configuration information further indicates that the third signal is associated with a spatial relation of a second path. The first apparatus sends the second signal and the third signal based on the second configuration information.

When the location information of the first apparatus is solved based on the round trip time of the signal between the third apparatus and the first apparatus, based on the second configuration information, spatial relations of the plurality of reference signals sent by the first apparatus may be associated with the plurality of paths of the at least one first signal received by the first apparatus, so that the plurality of reference signals sent by the first apparatus may be transmitted in the transmission directions of the paths. In this way, the round trip time between the first apparatus and the third apparatus can be calculated more accurately.

**In** this application, the first path and the second path may not be paths in the plurality of paths indicated by the first information obtained by the first apparatus, for example, may be two paths specified by a network apparatus for the first apparatus, or the first path and the second path are not paths corresponding to the at least one first signal. In another possible implementation, the first path and the second path are paths in the plurality of paths indicated by the first information obtained by the first apparatus, or the first path and the second path are two paths corresponding to the at least one first signal measured by the first apparatus.

**In** a possible implementation, the first path and the second path are paths corresponding to a same first signal; or the first path and the second path are paths corresponding to two different first signals. In this way, the two paths may come from a same signal sending direction or different signal sending directions, thereby providing more possibilities for path selection.

**In** a possible implementation, the first apparatus generates the second configuration information based on the measurement results of the plurality of paths of the at least one first signal; or the first apparatus receives the second configuration information. In this way, solution flexibility can be improved.

**In** a possible implementation, a quantity of signals configured based on second configuration information is associated with a quantity of paths in the plurality of paths. For example, a quantity of paths in the plurality of paths obtained by the first apparatus by measuring the at least one first signal is equal to (or greater than) a quantity of reference signals that are configured for the first apparatus and that are used for positioning. In this way, each reference signal that is configured for the first apparatus and that is used for positioning may be associated with a spatial relation of one of the plurality of paths, to improve appropriateness of the solution.

**According to a second aspect,** an embodiment of this application provides a positioning method, and the method may be applied to a location management apparatus. The location management apparatus may be, for example, a location management device or a unit, a module, or a chip (system) in the location management device.

**In** this solution, the location management apparatus receives first information, where the first information is determined based on measurement results of a plurality of paths of at least one first signal, and the first information includes information that indicates transmission directions of the plurality of paths. The location management apparatus determines location information of a to-be-positioned apparatus based on the first information.

Because the first information may indicate the transmission directions of the plurality of paths, the first information may be used to construct an accurate geometric relation model between the plurality of paths, so that when the location management apparatus solves the location information of the to-be-positioned apparatus based on the geometric relation model, accuracy of the location information can be improved.

In this application, the information that indicates the transmission directions of the paths may include information that indicates reflective surfaces of the paths and/or information that indicates the paths. For descriptions and beneficial effect of related implementations of the first information, refer to the related descriptions of the first aspect. Details are not described again.

In a possible implementation, the location management apparatus sends first configuration information.

For descriptions and beneficial effect of related implementations of the first configuration information, refer to the related descriptions of the first aspect. Details are not described again.

In a possible implementation, the location management apparatus sends second information based on the first information. The second information includes fourth information and/or the information that indicates the transmission directions of the plurality of paths. The fourth information indicates that a second signal is associated with a spatial relation of a first path, and the fourth information further indicates that a third signal is associated with a spatial relation of a second path. In this embodiment of this application, information that is in the second information and that indicates a transmission direction of a path may include information that indicates a reflective surface of the path and/or information that indicates the path. For related content of the information that indicates the reflective surface of the path and the information that indicates the path, refer to the related descriptions of the first aspect. Details are not described again.

The second information is used to assist a second apparatus in configuring, for a first apparatus, a spatial relation of a reference signal used for positioning. Because spatial relations of a plurality of reference signals sent by the first apparatus may be associated with the plurality of paths of the at least one first signal received by the first apparatus, the plurality of reference signals sent by the first apparatus may be transmitted in the transmission directions of the paths. In this way, a round trip time between the first apparatus and a third apparatus can be calculated more accurately.

**In** a possible implementation, the location management apparatus receives third information, where the third information is obtained based on a measurement result of the second signal and a measurement result of the third signal, the second signal is associated with a spatial relation of the first path, and the third signal is associated with a spatial relation of the second path. The location management apparatus determines the location information of the to-be-positioned apparatus based on the first information and the third information.

Because the location management apparatus may determine the location information of the to-be-positioned apparatus (for example, the first apparatus) with reference to more information, positioning accuracy can be further improved.

**In** a possible implementation, the third information includes at least one of the following content: information that indicates a time of arrival of the second signal; information that indicates an angle of arrival of the second signal; information that indicates a round trip time corresponding to the second signal; information that indicates a time of arrival of the third signal; information that indicates an angle of arrival of the third signal; or information that indicates a round trip time corresponding to the third signal. The information may assist the location management apparatus in determining the location information of the first apparatus.

**In** a possible implementation, the first path and the second path are paths corresponding to a same first signal; or the first path and the second path are paths corresponding to two different first signals.

**In** a possible implementation, a quantity of signals configured based on second configuration information is associated with a quantity of paths in the plurality of paths.

For related implementations of the first path and the second path, and descriptions and beneficial effect of the related implementations in the second aspect, refer to the related descriptions of the first aspect. Details are not described again.

**According to a third aspect,** an embodiment of this application provides a positioning method, and the method may be applied to a second apparatus. The second apparatus may be, for example, a terminal, or a unit, a module, or a chip (system) in the terminal. The second apparatus may alternatively be a network device or a chip (system) in a network.

**In** this solution, the second apparatus receives second information. The second information is obtained based on measurement results of a plurality of paths of at least one first signal received by a first apparatus. The second apparatus sends second configuration information based on the second information, where the second configuration information indicates that a second signal is associated with a spatial relation of a first path, the second configuration information further indicates that a third signal is associated with a spatial relation of a second path, and the second configuration information is used by the first apparatus to send the second signal and the third signal.

For descriptions and beneficial effect of related implementations of information that is in the second information and that indicates transmission directions of the plurality of paths, refer to the related descriptions of the second aspect. Details are not described again.

**According to a fourth aspect,** an embodiment of this application provides a positioning method, and the method may be applied to a third apparatus. The third apparatus and the second apparatus may be a same device or different devices. The third apparatus may be, for example, a terminal, or a unit, a module, or a chip (system) in the terminal. The third apparatus may alternatively be a network device or a chip (system) in a network.

In this solution, the third apparatus receives a second signal and a third signal. The third apparatus determines third information based on a measurement result of the second signal and a measurement result of the third signal, where the third information is used for positioning.

In a possible implementation, the third apparatus sends at least one first signal.

In a possible implementation, the third information includes at least one of the following content: information that indicates a time of arrival of the second signal; information that indicates an angle of arrival of the second signal; information that indicates a round trip time corresponding to the second signal; information that indicates a time of arrival of the third signal; information that indicates an angle of arrival of the third signal; or information that indicates a round trip time corresponding to the third signal.

In a possible implementation, the third apparatus sends the third information.

For descriptions and beneficial effect of related implementations in the fourth aspect, refer to the related descriptions of the first aspect. Details are not described again.

**According to a fifth aspect,** a communication apparatus is provided. The communication apparatus may be the foregoing first apparatus, second apparatus, third apparatus, or location management apparatus. The communication apparatus may include a communication unit and a processing unit, to perform any one of the first aspect to the fourth aspect, or perform any one of the possible implementations of the first aspect to the fourth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the fourth aspect, or perform any one of the possible implementations of the first aspect to the fourth aspect.

**According to a sixth aspect,** a communication apparatus is provided. The communication apparatus may be the foregoing first apparatus, second apparatus, third apparatus, or location management apparatus. The communication apparatus may include a processor and a memory, to perform any one of the first aspect to the fourth aspect, or perform any one of the possible implementations of the first aspect to the fourth aspect. Optionally, a transceiver is further included. The memory is configured to store a computer program or instructions. The processor is configured to invoke the computer program or the instructions from the memory and run the computer program or the instructions. When the processor executes the computer program or the instructions in the memory, the communication apparatus is caused to perform any one of the first aspect to the fourth aspect, or perform any one of the possible implementations of the first aspect to the fourth aspect.

Optionally, there are one or more processors, and there are one or more memories.

Optionally, the memory may be integrated with the processor, or the memory and the processor are disposed separately.

Optionally, the transceiver may include a transmitter machine (a transmitter) and a receiver machine (a receiver).

**According to a seventh aspect,** a communication apparatus is provided. The communication apparatus may be the foregoing first apparatus, second apparatus, third apparatus, or location management apparatus. The communication apparatus may include a processor, to perform any one of the first aspect to the fourth aspect, or perform any one of the possible implementations of the first aspect to the fourth aspect. The processor is coupled to a memory. Optionally, the communication apparatus further includes the memory. Optionally, the communication apparatus further includes a communication interface, and the processor is coupled to the communication interface.

In an implementation, when the communication apparatus is a first apparatus, a second apparatus, a third apparatus, or a location management apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

**According to an eighth aspect,** a system is provided. The system includes the foregoing second apparatus.

In a possible implementation, the system may further include one or more first apparatuses. In another possible implementation, the system may further include one or more third apparatuses. In another possible implementation, the system may further include a location management apparatus.

**According to a ninth aspect,** a computer program product is provided. The computer program product includes a computer program (which may also be referred to as code or instructions). When the computer program is run, a computer is caused to perform any one of the first aspect to the fourth aspect, or perform any one of the possible implementations of the first aspect to the fourth aspect.

**According to a tenth aspect,** a computer-readable storage medium is provided. The computer-readable medium stores a computer program (which may also be referred to as code or instructions). When the computer program is run on a computer, the computer is caused to perform any one of the first aspect to the fourth aspect, or perform any one of the possible implementations of the first aspect to the fourth aspect.

**According to an eleventh aspect,** a chip system is provided. The chip system may include a processor. The processor is coupled to a memory, and may be configured to perform any one of the first aspect to the fourth aspect, or perform any one of the possible implementations of the first aspect to the fourth aspect. Optionally, the chip system further includes the memory. The memory is configured to store a computer program (which may also be referred to as code or instructions). The processor is configured to invoke the computer program from the memory and run the computer program, so that a device on which the chip system is installed performs any one of the first aspect to the fourth aspect, or performs any one of the possible implementations of the first aspect to the fourth aspect.

**According to a twelfth aspect,** a processing apparatus is provided, and includes an interface circuit and a processing circuit. The interface circuit may include an input circuit and an output circuit. The processing circuit is configured to: receive a signal through the input circuit, and transmit a signal through the output circuit, so that any one of the first aspect to the fourth aspect or any one of the possible implementations of the first aspect to the fourth aspect is implemented.

In a specific implementation process, the processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a first apparatus, a second apparatus, a third apparatus, or a location management apparatus, the interface circuit may be a radio frequency processing chip in the first apparatus, the second apparatus, the third apparatus, or the location management apparatus, and the processing circuit may be a baseband processing chip in the first apparatus, the second apparatus, the third apparatus, or the location management apparatus.

In another implementation, the communication apparatus may be some components in the first apparatus, the second apparatus, the third apparatus, or the location management apparatus, for example, an integrated circuit product like a system chip or a communication chip. The interface circuit may be an input/output interface, an interface circuit, an output circuit, an input circuit, a pin, a related circuit, or the like on the chip or the chip system. The processing circuit may be a logic circuit on the chip.

## BRIEF DESCRIPTION OF DRAWINGS

FIG. 1 is a diagram of an architecture of a communication system according to an embodiment of this application;
FIG. 2A is a diagram of another architecture of a communication system according to an embodiment of this application;
FIG. 2B is a diagram of another architecture of a communication system to which an embodiment of this application is applicable;
FIG. 2C is a diagram of another architecture of a communication system to which an embodiment of this application is applicable;
FIG. 2D is a diagram of another architecture of a communication system to which an embodiment of this application is applicable;
FIG. 2E is a diagram of another architecture of a communication system to which an embodiment of this application is applicable;
FIG. 3 is a diagram of a principle of determining information about an angle of arrival according to an embodiment of this application;
FIG. 4 is a diagram of a principle of performing positioning by using an RTT positioning technology and an angle of arrival positioning technology according to an embodiment of this application;
FIG. 5 is a schematic flowchart of a positioning method according to an embodiment of this application;
FIG. 6 is a diagram of a principle of determining location information of a first apparatus according to an embodiment of this application;
FIG. 7 is a schematic flowchart of a positioning method according to an embodiment of this application;
FIG. 8 is a schematic flowchart of a positioning method according to an embodiment of this application;
FIG. 9 is a schematic flowchart of a positioning method according to an embodiment of this application;
FIG. 10 is a diagram of a structure of a communication apparatus according to an embodiment of this application; and
FIG. 11 is a diagram of a structure of a communication apparatus according to an embodiment of this application.

## DESCRIPTION OF EMBODIMENTS

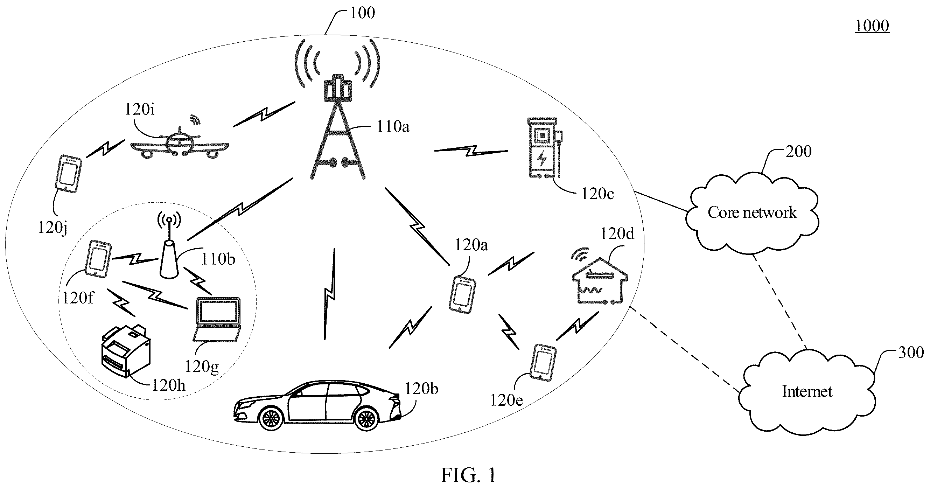

**FIG.** 1 is an example of a diagram of an architecture of a communication system 1000 to which an embodiment of this application is applicable. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other in a wired or wireless manner, and radio access network devices may be connected to each other in a wired or wireless manner. FIG. 1 is only a diagram. The communication system may further include other network devices, for example, may further include a wireless relay device and a wireless backhaul device. This is not shown in FIG. 1.

The network device in embodiments of this application includes, for example, a radio access network (radio access network, RAN) device. The radio access network device may be a base station (base station), an evolved NodeB (evolved NodeB, eNodeB), a transmission reception point (transmission reception point, TRP), a transmission point (transmission point, TP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that completes a part of functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP).

The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, a sensor, or the like. A specific technology and a specific device form that are used by the terminal are not limited in embodiments of this application.

The terminal may establish a connection to a carrier network through an interface (for example, N1) provided by the carrier network, and use services such as data and/or voice provided by the carrier network. The terminal may further access a domain name system (domain name system, DNS) through the carrier network, and use a carrier service deployed on the DNS and/or a service provided by a third party. The third party may be a service provider other than the carrier network and the terminal, and may provide services such as data and/or a voice for the terminal. A specific representation form of the third party may be specifically determined based on an actual application scenario, and is not limited herein.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, a road side unit (road side unit, RSU), or the like. A specific technology and a specific device form that are used by the terminal are not limited in embodiments of this application.

The base station and the terminal may be fixed or movable. The base station and the terminal may be deployed on land, including being deployed indoor, outdoor, hand-held, or vehicle-mounted, or may be deployed on water, or may be deployed on an aircraft, a balloon, or an artificial satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 each may be referred to as a communication apparatus having a function of a base station, and 120a to 120j in FIG. 1 each may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes a wireless connection to the terminal is referred to as a serving cell of the terminal. When communicating with the serving cell, the terminal is further interfered by a signal from a neighboring cell.

The core network in embodiments of this application may include a network device that processes and forwards signaling and data of a user, includes core network devices such as an access and mobility management function (access and mobility management function, AMF), a session management function (session management function, SMF), a user plane gateway, and a location management device. The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane network element function entity (user plane function, UPF), is generally located on a network side. The AMF and the SMF are equivalent to a mobility management entity (mobility management entity, MME) in a long term evolution (long term evolution, LTE) system. The AMF is mainly responsible for admission, and the SMF is mainly responsible for session management. Certainly, the core network may also include other network elements, which are not listed one by one herein.

The location management device has a positioning function. The location management device in embodiments of this application may include a location management function (location management function, LMF) or a location management component (location management component, LMC), or may be a local location management function (local location management function, LLMF) located in the network device, or may be a location server. This is not limited in embodiments of this application. For ease of description, the following embodiments are described by using an example in which the location management device is an LMF.

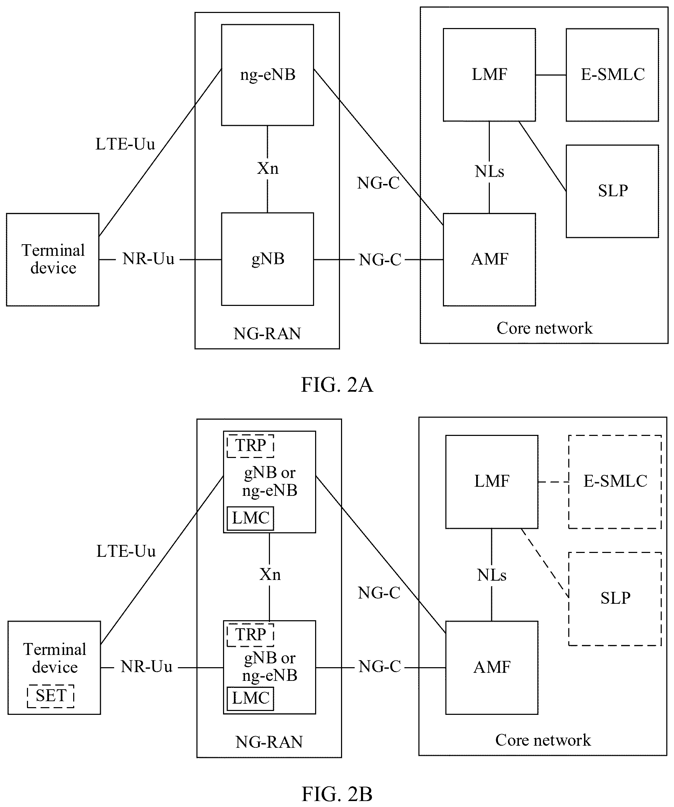

Based on the content shown in FIG. 1, **FIG. 2A** is an example of a diagram of an architecture of a communication system to which an embodiment of this application is applicable. The communication system is shown by using positioning architectures in LTE and NR Rel-16 as an example. As shown in FIG. 2A, included network elements/modules mainly include three parts: a next generation radio access network (next generation radio access network, NG-RAN), a terminal, and a core network.

The core network includes a location management function (location management function, LMF), an access and mobility management function (access and mobility management function, AMF), a service location protocol (service location protocol, SLP), an evolved serving mobile location center (evolved serving mobile location center, E-SMLC), and the like. A location server, namely, the location management function (location management function, LMF), is connected to the AMF, and the LMF and the AMF are connected through an NLs interface. UE communicates with a serving base station through a Uu link. An ng-eNB is an LTE base station, and a gNB is an NR base station. The base stations communicate with each other through an Xn interface. The base station communicates with the AMF through an NG-C interface. The AMF (Access and Mobility Management Function, access and mobility management unit) is equivalent to a router for communication between the gNB and the LMF. The LMF implements location estimation of the UE, and the AMF communicates with the LMF through an NLs interface. The LMF is responsible for supporting different types of location services related to the terminal, including positioning the terminal and transferring assistance data to the terminal. The LMF may perform positioning calculation on the terminal based on a measurement result of another network element. The AMF may receive a terminal-related location service request from a 5th generation core network location service (5th generation core network location service, 5GC LCS) entity, or the AMF may enable some location services on behalf of a specific terminal, and forward a location service request to the LMF. After obtaining location information returned by the terminal, the AMF returns the related location information to the 5GC LCS entity.

The NG RAN may include a next generation NodeB (next generation NodeB, gNB), a next generation evolved NodeB (next generation evolved NodeB, ng-eNB), and the like. The gNB and the ng-eNB are connected through an Xn interface, and the LMF and the ng-eNB/gNB are connected through an NG-C interface.

One or more network devices on an NG RAN side configure a resource used to send a reference signal, and send the reference signal to the terminal. The terminal measures a downlink signal like the reference signal, and feeds back a measurement result to the LMF, to support positioning. It should be understood that the reference signal is used for positioning, and may also be referred to as a positioning reference signal. This specification is mainly for downlink positioning. Therefore, the positioning reference signal may be a PRS, a cell-common reference signal (common reference signal, CRS), a channel state information (channel state information, CSI)-RS, or the like. In this specification, an example in which the positioning reference signal is a PRS is used for description. For a manner of another reference signal, refer to the example. Details are not described herein again. In a possible implementation, the PRS resource may be configured based on a cell level. In other words, a PRS resource is configured for each cell. After the terminal re-establishes a radio resource control (radio resource control, RRC) connection to a target cell, a base station of the target cell may configure a PRS resource for the target cell, and the terminal device obtains the PRS resource configured for the target cell, to receive and measure a PRS on the PRS resource.

A communication method provided in embodiments of this application may be applied to various communication systems, for example, an LTE system, a 5th generation (5th generation, 5G) system like NR, and a next generation communication system like a 6G system. Certainly, the technical solutions in embodiments of this application may also be applied to another communication system, provided that the communication system has a positioning requirement for a terminal. In addition, the communication system is further applicable to a future-oriented communication technology. The systems described in embodiments of this application are intended to describe the technical solutions in embodiments of this application more clearly, and constitute no limitation on the technical solutions provided in embodiments of this application. A person of ordinary skill in the art may learn that, with evolution of a network architecture, the technical solutions provided in embodiments of this application are also applicable to similar technical problems.

FIG. 2B shows another network architecture of a communication system to which an embodiment of this application is applicable. The communication system includes a core network, an NG-RAN, and a terminal. The core network includes network elements/modules such as an LMF, an AMF, a secure user plane location (secure user plane location, SUPL) location platform (SUPL location platform, SLP), and an enhanced serving mobile location center (enhanced serving mobile location center, E-SMLC). The NG RAN includes network elements/modules such as a gNB and a ng-eNB. For specific functions of the network elements/modules such as the LMF, the AMF, the SLP, the E-SMLC, the gNB, and the ng-eNB and connection relationships between the network elements/modules, refer to descriptions of a related part in FIG. 2A above. Details are not described herein again.

A difference from FIG. 2A lies in that, in the network architecture shown in FIG. 2B, an LMC is added to the NG-RAN, and a specific deployment manner of the LMC is being disposed in a base station, for example, disposed in the gNB or the ng-ENB. In this network architecture, the LMC serves as an internal function of the base station. Therefore, no new interface needs to be introduced. The LMC may undertake some functions of the LMF. In this architecture, the gNB may not report a measurement result of a signal used for positioning to the LMF in the core network, thereby reducing signaling overheads and reducing a positioning latency.

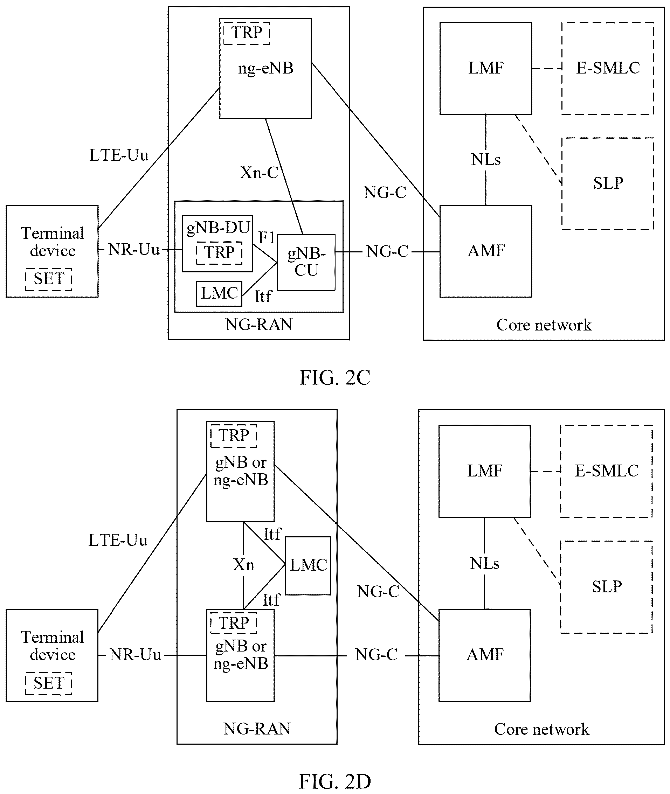

FIG. 2C shows another network architecture of a communication system to which an embodiment of this application is applicable. As shown in FIG. 2C, the communication system also includes a core network, an NG-RAN, and a terminal. A difference from FIG. 2B lies in that, an LMC in the network architecture shown in FIG. 2C serves as an independent logical node in the NG-RAN, and is connected to a base station through a new interface. For example, in FIG. 2C, the LMC is connected to a gNB-CU through an interface Itf.

FIG. 2D shows another network architecture of a communication system to which an embodiment of this application is applicable. As shown in FIG. 2D, the communication system also includes a core network, an NG-RAN, and a terminal. An LMC serves as an independent logical node in the NG-RAN. A difference from FIG. 2C lies in that, the LMC may be connected to a plurality of base stations through new interfaces in FIG. 2D. In FIG. 2D, an example in which the LMC is connected to two base stations is used. In a specific implementation, the LMC may alternatively be connected to more base stations.

It should be understood that FIG. 2A, FIG. 2B, FIG. 2C, and FIG. 2D are examples for describing the communication systems to which embodiments of this application are applicable, and do not specifically limit types, quantities, connection manners, and the like of network elements included in the communication systems to which this application is applicable. In addition, a network element/module shown by a dashed line in FIG. 2A, FIG. 2B, FIG. 2C, and FIG. 2D is not mandatory, and is optional. For example, the E-SMLC or the SLP is not mandatory. Alternatively, the network element/module shown by the dashed line is in another existence form. For example, the gNB or the ng-eNB is also referred to as a transmission reception point (transmission reception point, TRP) node in some embodiments, and the terminal is referred to as an SUPL enabled terminal (SUPL enabled terminal, SET) in some embodiments, where SUPL is short for secure user plane location (secure user plane location, SUPL).

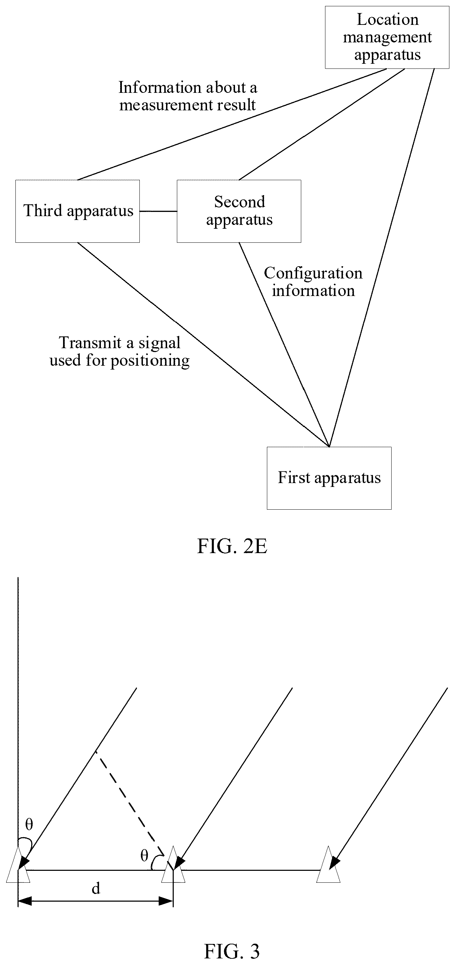

FIG. 2E is an example of a diagram of another network architecture of a communication system according to an embodiment of this application. As shown in FIG. 2E, the communication system includes a first apparatus, a second apparatus, and a third apparatus. Optionally, the communication system may further include a location management apparatus. In this embodiment of this application, the second apparatus may configure information for the first apparatus, for example, may configure, for the first apparatus, configuration information of a signal used for positioning. For example, the signal that is used for positioning and that is sent by the first apparatus is an SRS, and the second apparatus may be configured to configure configuration information of the SRS for the first apparatus. The signal used for positioning may be transmitted between the first apparatus and the third apparatus. The third apparatus may determine a location of the first apparatus based on a measurement result; or the third apparatus may report the measurement result to the location management apparatus. In this embodiment of this application, information may also be transmitted between the first apparatus and the location management apparatus. For example, the first apparatus may also transmit the measurement result to the location management apparatus.

The first apparatus and/or the third apparatus in this embodiment of this application may be the network device, the chip (system) in the network device, the terminal, or the chip (system) in the terminal in FIG. 1, FIG. 2A, FIG. 2B, FIG. 2C, or FIG. 2D.

When the first apparatus may be the terminal or the chip (system) in the terminal shown in FIG. 1, FIG. 2A, FIG. 2B, FIG. 2C, or FIG. 2D, the third apparatus may be the terminal, the chip (system) in the terminal, the network device, or the chip (system) in the network device shown in FIG. 1, FIG. 2A, FIG. 2B, FIG. 2C, or FIG. 2D. When the first apparatus may be the network device or the chip (system) in the network shown in FIG. 1, FIG. 2A, FIG. 2B, FIG. 2C, or FIG. 2D, the third apparatus may be the terminal, the chip (system) in the terminal, the network device, or the chip (system) in the network device shown in FIG. 1, FIG. 2A, FIG. 2B, FIG. 2C, or FIG. 2D.

In this embodiment of this application, the second apparatus and the third apparatus may be a same apparatus, or may be two different apparatuses. The second apparatus may be the network device, the chip (system) in the network device, the terminal, or the chip (system) in the terminal in FIG. 1, FIG. 2A, FIG. 2B, FIG. 2C, or FIG. 2D. For example, the second apparatus is the terminal or the chip (system) in the terminal, or the second apparatus may have a function of configuring a related parameter for the first terminal. For example, the second apparatus is a road side unit (road side unit, RSU). For example, the second apparatus is a serving base station, the third apparatus is a neighboring base station of the serving base station, and the first apparatus is a terminal.

The location management apparatus in this embodiment of this application may be the location management device or the chip (system) in the location management device in FIG. 1, FIG. 2A, FIG. 2B, FIG. 2C, or FIG. 2D. The location management device may include one or more of an LMF, an LMC, or an LLMF. The location management apparatus and the second apparatus (and/or the third apparatus) in this embodiment of this application may be located in a same device, or the location management apparatus and the first apparatus may be located in a same device.

The following first describes nouns or terms in embodiments of this application.

**(1)** Positioning reference signal

A first signal, a second signal, and a third signal in embodiments of this application may be understood as signals that can be used for positioning. The first signal, the second signal, and the third signal in embodiments of this application may also be referred to as positioning signals. The first signal is a signal sent by a third apparatus, and the second signal and the third signal are signals sent by a first apparatus.

One or more of the first signal, the second signal, and the third signal in embodiments of this application may be a PRS or an SRS, or may be one or more of a channel state information reference signal (channel state information reference signal, CSI-RS), a demodulation reference signal (demodulation reference signal, DMRS), a phase-tracking reference signal (phase-tracking reference signal, PTRS), a sidelink positioning reference signal (sidelink positioning reference signal, SL-PRS), and a synchronization signal and physical sidelink broadcast channel block (synchronization signal and physical sidelink broadcast channel block, SSB).

The solutions provided in embodiments of this application are applicable to transmission that is of a signal used for positioning and that is between two apparatuses, for example, transmission that is of a signal used for positioning and that is between the first apparatus and the third apparatus. Each of the two apparatuses may be a terminal or a chip (system) in the terminal. In this case, it may also be understood that the solutions provided in embodiments of this application are also applicable to a sidelink (sidelink).

The sidelink (sidelink, SL) in embodiments of this application may also be referred to as a side link, a side link, a direct link, a side-link, a secondary link, or the like. In embodiments of this application, the foregoing terms each mean a link established between devices of a same type, and have a same meaning. The link between the devices of the same type may be a link between terminals, or the like. For the link between the terminals, there is a D2D link defined in 3GPP release (Rel)-12/13, and there is also a V2X link that is between vehicles, between a vehicle and a mobile phone, or between a vehicle and any entity and that is defined by the 3GPP, including Rel-14/15, for the internet of vehicles. An NR system-based V2X link and the like in Rel-16 and later releases that are currently being researched by the 3GPP are further included.

**(2) Spatial relation**

The spatial relation in embodiments of this application may be a spatial relation in English. In embodiments of this application, a spatial relation between signals (for example, a spatial relation between a second signal and a first path or a spatial relation between a third signal and a second path in subsequent descriptions) may be a relation between two signals when the two signals are transmitted in space. The spatial relation in embodiments of this application may alternatively be replaced with another name, for example, a beam, a beam direction, a sending direction, a transmit beam direction, a receiving direction, or a receive beam direction. The first path and the second path may be two paths of a same signal, or may be paths of two signals.

In embodiments of this application, that spatial relations of two signals are associated (for example, the second signal is associated with a spatial relation of the first path or the third signal is associated with a spatial relation of the second path in the subsequent descriptions) may mean that directions of the two signals are consistent or close when the two signals are transmitted in space. That the spatial relations of the two signals are associated in embodiments of this application may alternatively mean that there is an association relationship between a transmit beam or a receive beam of one signal and a transmit beam or a receive beam of the other signal in space. For example, beam directions of the transmit beam or the receive beam of the signal and the transmit beam or the receive beam of the other signal are consistent or close.

(3) Information about an angle of arrival

(3.1) Calculation method of the angle of arrival

An example in which a third apparatus measures a signal from a first apparatus to obtain information about an angle of arrival is used for description below. A solution in which the first apparatus obtains information about an angle of arrival by measuring a signal from the third apparatus is similar to this solution. Details are not described again.

The third apparatus may estimate the angle of arrival by using a phase difference between a plurality of antenna array elements. FIG. 3 is an example of a diagram of a principle of determining information about an angle of arrival according to an embodiment of this application. For example, the third apparatus measures the signal sent by the first apparatus to determine the angle of arrival. As shown in FIG. 3, the third apparatus may include a plurality of antenna array elements (for example, may include two or more antenna array elements, where the antenna array element may also be referred to as an array antenna). Generally, it is assumed that a distance between the first apparatus and the third apparatus is long enough. In this case, propagation paths of the signal sent by the first apparatus into the antenna array elements of the third apparatus may be considered as parallel. In this case, in a possible implementation, the angle of arrival may be calculated by using the following Formula (1) and Formula (2):

$$\psi = e^{-j\omega\tau} = e^{-j\omega\frac{d sin\theta}{c}} \quad \ldots\ldots \text{Formula (1)}$$

$$\tau = \frac{d sin\theta}{c} \quad \ldots\ldots \text{Formula (2)}$$

In Formula (1) and Formula (2), $\psi$ is a phase difference between the antenna array elements, $\theta$ is the angle of arrival of the signal sent by the first apparatus, d is a distance between the antenna array elements, c is a speed of light, $\tau$ is a wave path difference between the signal sent by the first apparatus and the antenna array element, and $e^{-j\omega}$ may be a preset constant.

(3.2) Information about the angle of arrival

In embodiments of this application, the information about the angle of arrival includes at least one of the following three pieces of content: an azimuth angle of arrival (azimuth angle of Arrival, AOA) and/or a zenith angle of arrival (zenith angle of arrival, ZOA).

In embodiments of this application, the information about the angle of arrival may further include information about a coordinate system, which may be a global coordinate system (Global Coordinate System, GCS) or a local coordinate system (Local Coordinate System, LCS). The global coordinate system is a coordinate system of three-dimensional space in which an object is located. In the local coordinate system, a center of an object is used as a coordinate origin in the coordinate system, and operations such as rotation or translation of the object are performed around the local coordinate system. In this case, when an operation like rotation or translation is performed on an object model, a corresponding rotation or translation operation is also performed on the local coordinate system.

When an angular coordinate system is the GCS, an azimuth angle of arrival may be an included angle between an incident angle direction and a due north direction or an included angle between a projection of the incident angle direction on a horizontal plane and the due north direction, and a ZOA may be an included angle between the incident angle direction and a zenith direction. When an angular coordinate system is the LCS, an azimuth angle of arrival may be an included angle between a projection of an incident angle direction on an x-y plane of the rectangular coordinate system and a due north direction, and a ZOA may be an included angle between the incident angle direction and a z-axis.

In the foregoing possible implementation, when the information about the angle of arrival does not include the angle coordinate system (for example, the information about the angle of arrival includes only the azimuth angle of arrival, or includes only the ZOA), in this implementation, a default coordinate system may be used. For example, a default coordinate system may be defined for each of the azimuth angle of arrival and the ZOA. The default coordinate system defined for the azimuth angle of arrival may be a coordinate system of the GCS, or may be a coordinate system of the LCS. The default coordinate system defined for the ZOA may be a coordinate system of the GCS, or may be a coordinate system of the LCS.

For example, the azimuth angle of arrival in the information about the angle of arrival may be an included angle, at an end of the third apparatus, between the due north direction and a projection of a signal transmission path between the third apparatus and the first apparatus on the horizontal plane. The ZOA included in the information about the angle of arrival may specifically be an included angle, at the end of the third apparatus, between the zenith direction and the projection of the signal transmission path between the third apparatus and the first apparatus on the horizontal plane.

(3.3) RTT

The RTT may be understood as a loop time of a signal between two apparatuses.

For example, the third apparatus sends a signal al (where the signal a1 is, for example, a positioning reference signal (positioning reference signal, PRS)) to the first apparatus, the third apparatus records a transmitting time t0 of the signal a1 by using a local clock of the third apparatus, and the first apparatus measures a time of arrival t1 of the signal a1 by using a local clock of the first apparatus.

After receiving the signal a1, the first apparatus sends a signal a2 (where the signal a2 is, for example, a sounding reference signal (sounding reference signal, SRS)) to the third apparatus, the first apparatus records a transmitting time t2 of the signal a2 by using the local clock of the first apparatus, and the third apparatus measures a time of arrival t3 of the signal a2 by using the local clock of the third apparatus. An RTT of signal transmission between the first apparatus and the third apparatus is [(t3-t0)-(t2-t1)].

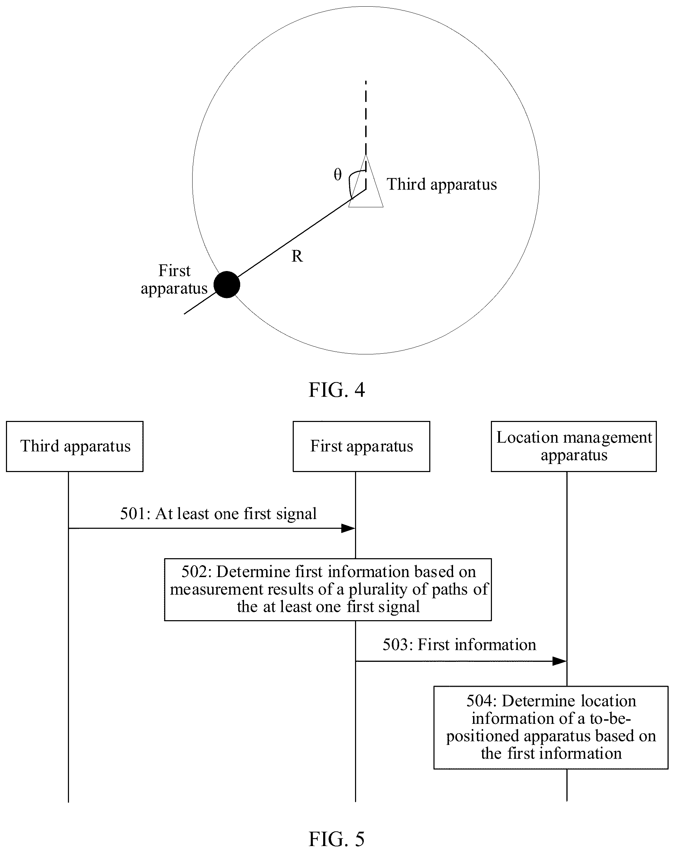

A possible positioning solution is described below. In the positioning solution, an RTT positioning technology and an angle of arrival positioning technology are used for positioning. FIG. 4 is an example of a diagram of a principle of performing positioning by using the RTT positioning technology and the angle of arrival positioning technology according to an embodiment of this application. As shown in FIG. 4, an RTT is obtained through signal transmission between the third apparatus and the first apparatus, and then it may be determined that a value of a distance R between the third apparatus and the first apparatus is (RTT×c/2), where c is a speed of light, × represents multiplication, and / represents division. Therefore, it may be determined that the first apparatus is located on a circle that uses the third apparatus as a circle center and uses R as a radius. In addition, the third apparatus measures the signal from the first apparatus, to obtain the information about the angle of arrival. A ray may be determined by using the information about the angle of arrival, where the ray uses the third apparatus as a start point, and an included angle between the ray and the third apparatus is an angle of arrival $\theta$. An intersection point between the ray and the circle with the radius of R is a location of the first apparatus.

The positioning solution can implement single-site positioning, in other words, one third apparatus (in other words, a plurality of third apparatuses are not required) can implement positioning of the first apparatus. The solutions provided in embodiments of this application may also be applied to a scenario in which the first apparatus is positioned by using a plurality of third apparatuses. In this scenario, the solution, on the side of the third apparatus, that is provided in embodiments of this application can be applied on all or some of the plurality of third apparatuses.

Based on embodiments shown in FIG. 1, FIG. 2A, FIG. 2B, FIG. 2C, FIG. 2D, FIG. 2E, FIG. 3, and FIG. 4 and the foregoing other content, **FIG. 5** is an example of a schematic flowchart of a communication method according to an embodiment of this application. For ease of understanding of this application, interaction between a first apparatus, a second apparatus, a third apparatus, and a location management apparatus is described in FIG. 5. In FIG. 5, the first apparatus, the second apparatus, the third apparatus, and the location management apparatus may be the first apparatus, the second apparatus, the third apparatus, and the location management apparatus in FIG. 4. For related descriptions, refer to the foregoing content. Details are not described again.

As shown in FIG. 5, the method includes the following steps.

**Step 501:** The third apparatus sends at least one first signal.

Correspondingly, the first apparatus receives the at least one first signal.

The first signal is a signal that can be used for positioning, for example, may be a PRS. For related content, refer to the foregoing descriptions. Details are not described again.

**Step 502:** The first apparatus determines first information based on measurement results of a plurality of paths of the at least one first signal.

The first information is determined based on the measurement results of the plurality of paths of the at least one first signal.

The first information may include the following information A1 and/or information A2. The information A1 is information that indicates transmission directions of the plurality of paths. The information A2 is the measurement results of the plurality of paths.

**Information A1:** information that indicates the transmission directions of the plurality of paths

In this embodiment of this application, a transmission direction of a path may be understood as a direction of the path or an orientation of the path. The transmission direction of the path may be written as the direction of the path in English.

In a possible implementation, the information that indicates the transmission directions of the plurality of paths may include information that indicates a reflective surface of the path and/or information that indicates the path.

The information that indicates the reflective surface of the path may include information A1.1. The information that indicates the path may include one or more of information A1.2, information A1.3, information A1.4, or information A1.5. The information A1.2 is angle information of the path in the plurality of paths. The information A1.3 is type information of the path in the plurality of paths. The information A1.4 is a ranking of the path in the plurality of paths when the paths of the at least one first signal are sorted based on an order of times of arrival. The information A1.5 is a ranking of the path in the plurality of paths when the paths of the at least one first signal are sorted based on an order of receive power strengths.

One or more of the information A1.1, the information A1.2, the information A1.3, the information A1.4, or the information A1.5 may indicate the transmission direction that is of the path in the plurality of paths and that is measured by the first apparatus. Therefore, in this application, the information belongs to information that indicates the transmission directions of the plurality of paths. In actual application, the information may alternatively be used for another purpose. For example, the information A1.4 may indicate the time of arrival of the path, and the information A1.5 indicates the receive power strength of the path. The information may assist the location management apparatus in evaluating reliability of location information or the like. For example, if a receive power of a path is high, the location management apparatus may consider that reliability of location information determined based on a related measurement result of the path is high.

Information A1.1: information that indicates the reflective surface of the path

The information about the reflective surface of the path in the plurality of paths may indicate the transmission direction of the path. Information about a reflective surface of a path in the plurality of paths may assist the location management apparatus in determining an algorithm corresponding to the reflection path, to more accurately solve location information of a to-be-positioned apparatus. For example, in the plurality of paths measured by the first apparatus, one path is a direct path, another path is a reflection path, and a reflective surface of the reflection path is a ground, that is, the reflection path is a path reflected by the ground. The information may assist the location management apparatus in establishing a geometric relation model between the direct path and the reflection path, to more accurately calculate the location information of the to-be-positioned apparatus with reference to measurement results of these paths.

The information A1.1 may include one or more of the following information A1.1.1, information A1.1.2, information A1.1.3, information A1.1.4, information A1.1.5, information A1.1.6, or information A1.1.7.

**Information A1.1.1:** information that indicates a type of the reflective surface of the path

The type of the reflective surface of the path may include a wall, a mirror, a ground, a reflection plate, or the like.

In this embodiment of this application, when measuring the first signal, the first apparatus may further distinguish between reflection path types by analyzing path features of related spectrums. For example, when path energy is concentrated, it may be considered that a reflectivity is high, and then it is inferred that a reflective surface may be a mirror; and when path energy is dispersed, it is considered that a reflection condition is not optimal, and then it is inferred that a reflective surface may be a ground or a wall.

The information that indicates the type of the reflective surface of the path may implicitly indicate a direction of the reflective surface or indicate the transmission direction of the path. For example, when the type of the reflective surface of the path is the ground, the information that indicates the type of the reflective surface of the path may further implicitly indicate that the reflective surface is located below the first apparatus. For another example, when the type of the reflective surface of the path is the wall, the information that indicates the type of the reflective surface of the path may further implicitly indicate that the reflective surface is in a horizontal direction of the first apparatus (where alternatively, a term indicating an orientation like south, east, west, or north is used for specification). For another example, when the type of the reflective surface of the path is a reflection plate, the information that indicates the type of the reflective surface of the path may further implicitly indicate that a direction of the reflective surface may be flexible. In this case, the location management apparatus may further determine the direction of the reflective surface and/or the transmission direction of the path with reference to other information.

**Information A1.1.2:** information that indicates a material of the reflective surface of the path

The material of the reflective surface of the path may include cement, wood, metal, glass, or the like.

The information about the material of the reflective surface indicates a property or a surface condition of the reflective surface, and is related to reflected energy. For example, an association relationship between a material and an energy spectrum shape may be pre-configured. The first apparatus performs multi-path identification based on a measured spectrum, and then determines a material of a corresponding reflective surface based on an identified energy spectrum shape. Spectrum shape matching helps ensure accuracy of reflection path determining. An energy spectrum is generated after the first apparatus processes the received first signal. Reflected energy of metal or glass is concentrated, and reflected energy of a cement or wood material is dispersed. A half-peak width of a spectrum corresponding to a cement or wood material is greater than that of a spectrum corresponding to metal or glass.

The material of the reflective surface may also implicitly indicate the direction of the reflective surface and/or the transmission direction of the path. For example, if the material of the reflective surface is glass, the location management apparatus may infer that the reflective surface is a wall. For another example, if the material of the reflective surface is cement, the location management apparatus may infer that the reflective surface is a ground. Then, an orientation of the reflective surface and/or the transmission direction of the path are/is inferred based on the type of the reflective surface. For related content, refer to the foregoing related descriptions. Details are not described again.

**Information A1.1.3:** information that indicates a reflectivity of the reflective surface of the path

The reflectivity of the reflective surface indicates a percentage of radiant energy reflected by the reflective surface to total radiant energy. The reflectivity of the reflective surface is related to properties of different reflective surfaces or surface conditions of the reflective surfaces, and may also be related to an incident angle and an electromagnetic wave wavelength. A value range is usually [0, 1].

For example, an association relationship between a reflectivity and an energy spectrum shape may be pre-configured. The first apparatus performs multi-path identification based on a measured spectrum, and then determines a reflectivity of a corresponding reflective surface based on an identified energy spectrum shape. Spectrum shape matching helps ensure accuracy of reflection path determining. An energy spectrum is generated after the first apparatus processes the received first signal, and can indicate a time change of receive energy of the first signal at a receive end. A higher reflectivity indicates that energy indicated by an energy spectrum shape is more concentrated, and a lower reflectivity indicates that energy indicated by an energy spectrum shape is more dispersed. A half-peak width of a spectrum corresponding to the lower reflectivity is greater than that of a spectrum corresponding to the higher reflectivity.

The reflectivity of the reflective surface may also implicitly indicate the direction of the reflective surface and/or the transmission direction of the path. For example, if the reflectivity of the reflective surface is high, the location management apparatus may infer that the reflective surface is glass, and then infer that the reflective surface is a wall. Then, the orientation of the reflective surface and/or the transmission direction of the path are/is inferred based on the type of the reflective surface. For related content, refer to the foregoing related descriptions. Details are not described again.

**Information A1.1.4:** information that indicates reflected energy of the reflective surface of the path

The reflected energy of the reflective surface may indicate the reflected energy of the reflective surface, or indicate a ratio of the reflected energy of the reflective surface to strongest reflected energy of all paths measured by the first apparatus, or indicate a ratio of the reflected energy of the reflective surface to receive energy of all paths measured by the first apparatus.

The reflected energy of the reflective surface is related to properties of different reflective surfaces or surface conditions of the reflective surfaces, and may also be related to an incident angle and an electromagnetic wave wavelength.

The first apparatus performs multi-path identification based on a measured spectrum, and then determines reflected energy of a corresponding reflective surface based on an identified energy spectrum shape. Spectrum shape matching helps ensure accuracy of reflection path determining. An energy spectrum is generated after the first apparatus processes the received first signal. Higher reflected energy indicates that energy indicated by an energy spectrum shape is more concentrated, and lower reflected energy indicates that energy indicated by an energy spectrum shape is more dispersed. A half-peak width of a spectrum corresponding to the lower reflected energy is greater than that of a spectrum corresponding to the higher reflected energy.

The reflected energy of the reflective surface may also implicitly indicate the direction of the reflective surface and/or the transmission direction of the path. For example, if the reflected energy of the reflective surface is high, the location management apparatus may infer that the reflective surface is glass, and then infer that the reflective surface is a wall. Then, the orientation of the reflective surface and/or the transmission direction of the path are/is inferred based on the type of the reflective surface. For related content, refer to the foregoing related descriptions. Details are not described again.

**Information A1.1.5:** information that indicates a surface feature of the reflective surface of the path

The surface feature of the reflective surface may indicate roughness of the reflective surface.

For example, an association relationship between a surface feature of a reflective surface and an energy spectrum shape may be pre-configured. The first apparatus performs multi-path identification based on a measured spectrum, and then determines a surface feature of a corresponding reflective surface based on an identified energy spectrum shape. Spectrum shape matching helps ensure accuracy of reflection path determining. An energy spectrum is generated after the first apparatus processes the received first signal. With a same material, lower surface roughness (namely, a smoother surface) of the reflective surface indicates that energy indicated by an energy spectrum shape is more concentrated, and higher surface roughness (namely, a rougher surface) of the reflective surface indicates that energy indicated by an energy spectrum shape is more dispersed. A half-peak width of a spectrum corresponding to the higher surface roughness is greater than that of a spectrum corresponding to the lower surface roughness.

The surface feature of the reflective surface may also implicitly indicate the direction of the reflective surface and/or the transmission direction of the path. For example, if the surface feature of the reflective surface indicates that the reflective surface is smooth, the location management apparatus may infer that the reflective surface is glass, and then infer that the reflective surface is a wall. Then, the orientation of the reflective surface and/or the transmission direction of the path are/is inferred based on the type of the reflective surface. For related content, refer to the foregoing related descriptions. Details are not described again.

**Information A1.1.6:** information that indicates a direction of the reflective surface of the path

In a possible example, the information that indicates the direction of the reflective surface of the path may indicate the orientation of the reflective surface, or indicate a direction of a normal vector of the reflective surface, or indicate a direction of the reflective surface relative to the first apparatus.

A normal vector of a surface (for example, a reflective surface) is a vector perpendicular to the surface, and the normal vector may indicate a direction and a tilt degree of the surface. For a given surface, there may be countless vectors perpendicular to the surface, all of which may be referred to as normal vectors of the surface.

For example, the first apparatus may be configured with some sensors, such as a gravity sensor, a magnetic field sensor, a gyroscope, or a camera. The first apparatus may sense accelerations from a plurality of coordinate axes through the sensors, and then identify a posture and an orientation of the first apparatus. The posture and the orientation of the first apparatus may indicate the transmission direction of the path.

For example, when the first apparatus needs to search for a reflection path, an antenna module of the first apparatus may invoke direction information from a sensor module, and different reflection paths may correspond to different beamforming of the antenna module.

For example, when the first apparatus needs to search for a reflection path reflected by the ground, the antenna module of the first apparatus directs a beam to the earth center direction. It may be understood as that the orientation of the first apparatus is a direction toward the earth center, and the transmission direction of the path is a direction of the path reflected by the ground. The reflective surface is the ground, and the direction of the reflective surface is a direction toward the sky. It may also be understood as that the reflective surface is located right below the first apparatus (the information may be understood as information about a direction of the reflective surface relative to the first apparatus). In this example, the direction of the normal vector of the reflective surface is a direction toward the earth center.

For example, when the first apparatus needs to search for a reflection path reflected by a wall, the antenna module of the first apparatus directs the beam to a direction parallel to the ground. It may be understood as that the orientation of the first apparatus is a direction perpendicular to the earth center, and the transmission direction of the path is a direction of the path reflected by the wall. The reflective surface is the wall, and the direction of the reflective surface is a direction parallel to the ground. It may also be understood as that the reflective surface is located in the east of the first apparatus (east is a term indicating an orientation, and may alternatively be replaced with another term indicating an orientation, for example, west, south, north, or southwest) (the information may be understood as information about a direction of the reflective surface relative to the first apparatus). In this example, the direction of the normal vector of the reflective surface is a direction perpendicular to the earth center.

In another possible example, the direction of the reflective surface of the path may further include angle information of the reflective surface. The angle information of the reflective surface may be represented by an included angle between the normal vector of the reflective surface and one or more reference axes in a coordinate system (for example, the reference axes may include three coordinate axes in the coordinate system). The coordinate system may be a GCS or an LCS. The global coordinate system may use the first apparatus as a coordinate origin. In another possible implementation, an angle of the reflective surface may alternatively include an included angle between a specific reference direction and a projection of the normal vector of the reflective surface on a reference surface. The reference axis and/or the reference direction may be selected by the first apparatus, or the reference axis and/or the reference direction may be a direction of a coordinate axis in a coordinate system, or may be a predefined reference direction.

For example, the first apparatus performs search in 45 degrees in a southeast direction, and finds a reflection path (the reflection path is a path in the plurality of paths measured by the first apparatus). In this case, a reflective surface of the reflection path is located in the southeast direction of the first apparatus, and a direction of the reflective surface (or referred to as a normal vector of the reflective surface) is 45 degrees in a northwest direction.

For another example, when the first apparatus needs to search for a path reflected by a wall or a reflection panel, the first apparatus may obtain an angle range of the to-be-searched path (the angle range may be pre-configured in the first apparatus, or may be configured by another apparatus for the first apparatus), and the first apparatus directs the antenna module toward the angle range. It may also be understood as that the antenna module of the first apparatus performs search within the angle range, to obtain the reflection path.

For another example, when the first apparatus needs to search for a path reflected by a wall or a reflection panel, the first apparatus may obtain an angle or a direction of the to-be-searched path (the angle or the direction may be pre-configured in the first apparatus, or may be configured by another apparatus for the first apparatus), and the first apparatus directs the antenna module toward the angle or the direction. It may also be understood as that the antenna module of the first apparatus performs search in the angle or the direction (for example, the direction may be a horizontal direction), to obtain the reflection path.

In a possible example, after obtaining the angle or the direction, the first apparatus may alternatively determine an angle range of the to-be-searched path based on the angle or the direction. For example, a direction (for example, a horizontal direction or a due north direction) is set as a reference, and the angle range of the to-be-searched path is a range determined by plus or minus 15 degrees (15 degrees are an example, and there may alternatively be another value) from the reference. In other words, the reference is considered as 0 degrees, and the angle range is a range from -15 degrees to 15 degrees. The angle range from -15 degrees to 15 degrees may be on a plane formed by two coordinate axes (for example, an x-axis and a y-axis, or an x-axis and a z-axis) in a geodetic coordinate system (or another coordinate system), or on any plane in the geodetic coordinate system (or another coordinate system). For example, the angle range of the to-be-searched path is a 15-degree pitch angle range, where any line in a plane formed by the z-axis and the y-axis (or the x-axis) in geodetic coordinates is considered as a reference, and a pitch angle is an angle range of maintaining $\pm 15$ degrees from the reference on the plane.

The information about the direction of the reflective surface may indicate the transmission direction of the path, so that the location management apparatus may establish a geometric relation model between the plurality of paths, to more accurately calculate the location information of the to-be-positioned apparatus with reference to the measurement results of these paths.

**Information A1.1.7:** information that indicates a location of the reflective surface of the path

The information about the location of the reflective surface of the path may indicate an orientation of the reflective surface, or indicate an orientation of the reflective surface relative to the first apparatus. For example, the information about the location of the reflective surface of the path may indicate coordinates of the reflective surface or a relative distance between the reflective surface and a terminal. For example, the terminal may obtain, through measurement, channel strength and a direction corresponding to a path. It is assumed that the terminal obtains approximate information of an environment in advance. The terminal may determine, through a sensor installed on the terminal, an orientation of the terminal and a corresponding location of the reflective surface in the environment, to determine coordinates of the reflective surface or a relative distance between the terminal and the reflective surface.

For example, the first apparatus performs search in 45 degrees in a southeast direction, and finds a reflection path (the reflection path is a path in the plurality of paths measured by the first apparatus). In this case, information about a location of a reflective surface of the reflection path indicates that the reflective surface is located in the southeast direction of the first apparatus. For another example, if the reflective surface is the ground, the information about the location of the reflective surface indicates that the reflective surface is located on the ground. For another example, if the reflective surface is the wall, the information about the location of the reflective surface indicates that the reflective surface is located on the wall. The wall may be a surface perpendicular to the ground.

The information about the location of the reflective surface may indicate the transmission direction of the path, so that the location management apparatus may establish a geometric relation model between the plurality of paths, to more accurately calculate the location information of the to-be-positioned apparatus with reference to the measurement results of these paths.

**Information A1.2:** angle information of the path in the plurality of paths

The angle information of the path may include information such as a direction of arrival of the path and an angle of arrival of the path.

The angle information of the path may include an angle range, and the angle range may be a search range for the first apparatus to find the path, or may be referred to as an angle search range of the first apparatus.

For example, the first apparatus faces the southeast direction, a search range is 42 degrees to 48 degrees in the southeast direction of the first apparatus, the first apparatus finds a reflection path (the reflection path is a path in the plurality of paths measured by the first apparatus), and a direction of the path is 45 degrees in the southeast direction of the first apparatus. The angle information of the reflection path may include an angle range of the path: 42 degrees to 48 degrees in the southeast direction. The angle information of the reflection path may alternatively include an angle of the path: 45 degrees in the southeast direction.

The angle information of the path may indicate the transmission direction of the path, so that the location management apparatus may establish a geometric relation model between the plurality of paths, to more accurately calculate the location information of the to-be-positioned apparatus with reference to the measurement results of these paths.

**Information A1.3:** type information of the path in the plurality of paths

Types of the path may include a first path or another path. Another path may alternatively be replaced with an additional path (additional path). Another path is a path other than the first path. The first path may be understood as an earliest path received by the first apparatus in paths corresponding to first signals. For example, the first path may be a LOS path.

The types of the path may further include a reflection path or a direct path. The first signals may be propagated through a line-of-sight (line-of-sight, LOS) path (that is, a straight-line distance between the first apparatus and the third apparatus). Due to existence of an obstacle (for example, a tree, a building, or a wall), a signal is reflected. Therefore, the first signals are also propagated through a non-line-of-sight (non-line-of-sight, NLOS) path. The NLOS path may be considered as a reflection path.

The type information of the path may implicitly indicate the transmission direction of the path. For example, when the type of the path is a direct path, the direction of the path is a straight-line direction from the third apparatus to the first apparatus. Then, the location management apparatus may establish a geometric relation model between the plurality of paths, to more accurately calculate the location information of the to-be-positioned apparatus with reference to the measurement results of these paths.

**Information A1.4:** ranking of the path in the plurality of paths when the paths of the at least one first signal are sorted based on the order of the times of arrival

For example, the first apparatus measures the first signals, and all obtained paths may be sequentially referred to as a first arrival path, a second arrival path, a third arrival path, and the like based on an order of times of arrival. The information A1.4 may include information that indicates a specific ranking for arrival of a path.

The type information of the path may implicitly indicate the transmission direction of the path. For example, when a path is a first arrival path, the location management apparatus may infer that the path is a direct path, and a direction of the path is the straight-line direction from the third apparatus to the first apparatus. Then, the location management apparatus may establish a geometric relation model between the plurality of paths, to more accurately calculate the location information of the to-be-positioned apparatus with reference to the measurement results of these paths.

**Information A1.5:** ranking of the path in the plurality of paths when the paths of the at least one first signal are sorted based on the order of the receive power strengths

For example, the first apparatus measures the first signals, and all obtained paths may be sequentially referred to as a first strongest path, a second strongest path, a third strongest path, and the like based on an order of receive power strengths. The information A1.5 may include information that indicates a specific ranking for strength of a path.

The type information of the path may implicitly indicate the transmission direction of the path. For example, when a path is a first strongest path, the location management apparatus may infer that the path is a direct path, and a direction of the path is the straight-line direction from the third apparatus to the first apparatus. Then, the location management apparatus may establish a geometric relation model between the plurality of paths, to more accurately calculate the location information of the to-be-positioned apparatus with reference to the measurement results of these paths.

**Information A2:** measurement results of the plurality of paths obtained by the first apparatus

The measurement results of the plurality of paths may include some parameters used for positioning, and these parameters may correspond to positioning technologies.

For example, an RTT positioning technology is used to position the first apparatus. The third apparatus sends the first signal (for example, the first signal is a PRS), and the first apparatus receives the first signal. The first apparatus sends a second signal (for example, the second signal is an SRS). A spatial relation of the second signal may be associated with a spatial relation of a first path of the first signal. The measurement results of the plurality of paths are used to determine a first RTT, and the first RTT is used to determine the location information of the first apparatus. The first RTT may be obtained according to the following formula: [(time at which the second signal arrives at the third apparatus - time at which the third apparatus sends the first signal) - (time at which the first path of the first signal arrives at the first apparatus - time at which the first apparatus sends the second signal)]. The measurement results of the plurality of paths obtained by the first apparatus may include information about the time at which the first path of the first signal arrives at the first apparatus (or referred to as information about a time of arrival of the first path) and/or information about the time at which the first apparatus sends the second signal. Alternatively, the measurement results of the plurality of paths obtained by the first apparatus may include a value of the first RTT (or referred to as information about a round trip time corresponding to the first path).

For another example, the measurement results of the plurality of paths may further include parameters such as a phase difference and an angle of arrival that are obtained by the first apparatus by measuring the at least one first signal.

In addition to the information A1 and the information A2, the first information may further include other information, for example, information that indicates a quantity of paths in the plurality of paths. The information may assist the location management device in positioning.

In this embodiment of this application, the first information is used for positioning. When the location management apparatus and the first apparatus belong to a same device, the first apparatus may have a positioning function. In this case, the first information may assist the first apparatus in positioning. For example, the first apparatus determines the location information of the first apparatus based on the first information. When the location management apparatus and the first apparatus do not belong to a same device, the first apparatus may send the first information to the location management apparatus, so that the location management apparatus determines the location information of the first apparatus with assistance of the first information. For example, the method procedure in FIG. 5 may include the following step 503 and step 504.

**Step 503:** The first apparatus sends the first information.

Correspondingly, the location management apparatus receives the first information.

**Step 504:** The location management apparatus determines the location information of the to-be-positioned apparatus based on the first information.

After obtaining the first information, the location management apparatus may determine, based on the first information, the transmission directions of the plurality of paths measured by the first apparatus, and then find a corresponding algorithm based on an association relationship between the transmission directions of the plurality of paths and pre-configured algorithms. The algorithm may be understood as a geometric model relation constructed based on the transmission directions of the plurality of paths. The location management apparatus can more accurately determine the location information of the to-be-positioned apparatus (for example, the first apparatus) according to the found algorithm. The solution provided in this embodiment of this application may also be used to solve location information of the third apparatus (for example, the third apparatus is a terminal). In this embodiment of this application, an example of solving the location information of the first apparatus is used for description.

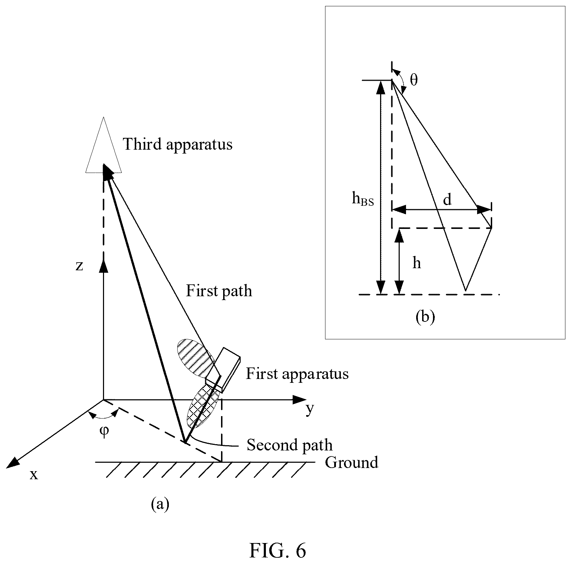

**FIG.** 6 is an example of a diagram of a principle of determining the location information of the first apparatus according to an embodiment of this application. As shown in FIG. 6, the third apparatus sends the at least one first signal, and the first apparatus measures the at least one first signal, to obtain information about the first path and a second path. In this embodiment of this application, the first path and the second path may not be paths of the first signal, or may be paths of the first signal. In this example, an example in which the first path and the second path are paths of the first signal is used for illustration. The second apparatus sends the second signal and a third signal, where the spatial relation of the second signal is associated with the first path of the first signal, and a spatial relation of the third signal is associated with the second path of the first signal. The first path is a direct path, and the second path is a reflection \path. The second path may be a reflection path constructed by using the ground, the wall, or any reflection panel. In FIG. 6, an example in which the second path is a reflection path reflected by the ground is used for presentation.

(a) in FIG. 6 is a diagram of two paths of the first apparatus in a three-dimensional coordinate system, and (b) in FIG. 6 is a diagram of a geometric relation of a plane constructed by the two paths. With reference to (a) in FIG. 6 and (b) in FIG. 6, an identifier of a height from the first apparatus to the ground is h, an identifier of a length from the second apparatus to a projection of the third apparatus on a horizontal plane (a plane formed by an x-axis and a y-axis) is d, an angle of arrival of the second signal includes an angle of arrival in a horizontal direction and an angle of arrival in a vertical direction, an identifier of the angle of arrival in the horizontal direction is $\varphi$, and an identifier of the angle of arrival in the vertical direction is $\theta$. The following Formula (3) may be obtained based on (a) in FIG. 6 and the geometric relation in (b) in FIG. 6:

$$\begin{cases} d = -(h_{BS} - h) * \tan\theta \\ \sqrt{(h_{BS} + h)^2 + d^2} - \sqrt{(h_{BS} - h)^2 + d^2} = \frac{p}{2} \end{cases} \quad \cdots\cdots \text{ Formula (3)}$$

In Formula (3), p is a product of the speed of light and a difference between a second RTT and the first RTT, and values of d and h may be obtained according to Formula (3). Further, coordinate information of the first apparatus may be obtained, and the coordinate information of the first apparatus may be determined according to the following Formula (4):

$$\begin{cases} x = x_{\mathrm{BS}} + d \cos \varphi \\ y = y_{\mathrm{BS}} + d \sin \varphi \end{cases} \ \ldots\ldots \ \text{Formula (4)}$$

With reference to Formula (3), it can be learned that a value of $\sqrt{(h_{\mathrm{BS}} + h)^2 + d^2}$ in Formula (3) is equal to a distance of a transmission path of the second path, and a value of $\sqrt{(h_{\mathrm{BS}} - h)^2 + d^2}$ in Formula (3) is equal to a distance of a transmission path of the first path. Because p is the product of the speed of light and the difference between the second RTT and the first RTT, $\dfrac{p}{2}$ may be considered as a difference between the distance of the transmission path of the second path and the distance of the transmission path of the first path that are calculated based on the two RTTs and the speed of light. The first RTT may be obtained according to the following formula: [(time at which the second signal arrives at the third apparatus - time at which the third apparatus sends the first signal) - (time at which the first path of the first signal arrives at the first apparatus - time at which the first apparatus sends the second signal)]. The second RTT may be obtained according to the following formula: [(time at which the third signal arrives at the third apparatus - time at which the third apparatus sends the first signal) - (time at which the second path of the first signal arrives at the first apparatus - time at which the first apparatus sends the third signal)].

Reflective surfaces (or referred to as transmission directions) of the paths measured by the first apparatus are related to a geometric relation between the measurement results. In other words, the reflective surfaces (or referred to as transmission directions) of the plurality of paths are related to a formula (or referred to as an algorithm) that is constructed between the measurement results and that is used to solve the location information of the first apparatus. If the location management apparatus solves the location information based only on one fixed algorithm, the obtained location information may be inaccurate or even incorrect.

In the solution provided in this application, the location management apparatus may determine a more accurate geometric relation (or a more accurate formula or algorithm) between the measurement results based on the first information, to obtain more accurate location information of the first apparatus.

Further, in a process of solving according to Formula (3), a difference operation is performed between the first RTT and the second RTT. The first RTT may be affected by a channel latency, and the second RTT may also be affected by a channel latency. Therefore, the difference operation between the first RTT and the second RTT may reduce impact of the channel latency, so that positioning accuracy can be improved.

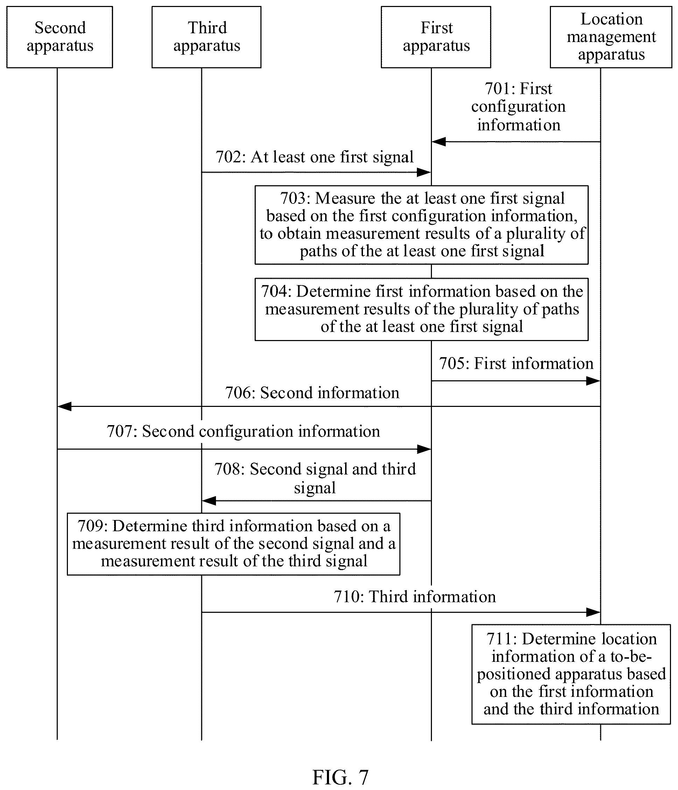

Based on embodiments shown in FIG. 1, FIG. 2A, FIG. 2B, FIG. 2C, FIG. 2D, FIG. 2E, FIG. 3, FIG. 4, FIG. 5, and FIG. 6 and the foregoing other content, FIG. 7 is an example of a schematic flowchart of a communication method according to an embodiment of this application. FIG. 7 may be considered as an extended embodiment of the embodiment in FIG. 5. A first apparatus, a second apparatus, a third apparatus, and a location management apparatus in FIG. 7 may be the first apparatus, the second apparatus, the third apparatus, and the location management apparatus in FIG. 4. For related descriptions, refer to the foregoing content. Details are not described again.

As shown in FIG. 7, the method includes the following steps.

**Step 701:** The location management apparatus sends first configuration information.

Correspondingly, the first apparatus receives the first configuration information.

In a possible example, the first configuration information may be carried in long term evolution positioning protocol (long term evolution positioning protocol, LPP) request positioning information.

The first configuration information includes information about a to-be-searched path. The information about the to-be-searched path may indicate a search direction, so that the first apparatus may perform search based on the search direction configured by using the first configuration information. If the information about the to-be-searched path indicates that the search direction is a direction toward the earth center, the first apparatus may direct an antenna direction of the first apparatus toward the earth center direction, to search for a path of the first signal. In this embodiment of this application, after receiving the first configuration information, the first apparatus may first perform search based on the search direction indicated by the first configuration information. If the path of the first signal is found in the search direction, the obtained path may be considered as a path in the plurality of paths mentioned in the embodiment shown in FIG. 5. It may also be understood as that a transmission direction of the path in the plurality of paths includes the direction indicated by the information about the to-be-searched path. In another possible implementation, the first apparatus may alternatively find no signal in the search direction indicated by the first configuration information. In this case, the first apparatus may search for a path of the first signal based on a pre-configured orientation.

The first configuration information may include the following information B1. The information B1 is the information about the to-be-searched path. The information about the to-be-searched path may indicate the search direction of the first apparatus, or indicate the search orientation of the first apparatus, or indicate a direction (or an orientation, a transmission direction, or the like) of the to-be-searched path.

In a possible implementation, the information about the to-be-searched path includes the following information (information B1.1) about a reflective surface of the to-be-searched path, and may further include one or more of information B1.2, information B1.3, information B1.4, or information B1.5. The information B1.2 is angle information of the to-be-searched path (which may also be referred to as search angle information of the first apparatus). The information B1.3 is type information of the to-be-searched path. The information B1.4 is a ranking of the to-be-searched path when paths of at least one first signal are sorted based on an order of times of arrival. The information B1.5 is a ranking of the to-be-searched path when the paths of the at least one first signal are sorted based on an order of receive power strengths.

**Information B1.1:** information about the reflective surface of the to-be-searched path

The information about the reflective surface of the to-be-searched path may indicate the transmission direction of the to-be-searched path, or indicate the search direction of the first apparatus. The first apparatus may search for a reflection path based on the information about the reflective surface indicated by the first configuration information, where information about a reflective surface of the found reflection path matches (or is the same as) the information about the reflective surface indicated by the first configuration information.

The information B1.1 may include one or more of the following information B1.1.1, information B1.1.2, information B1.1.3, information B1.1.4, information B1.1.5, information B1.1.6, or information B1.1.7.

**Information B1.1.1:** information that indicates a type of the reflective surface of the to-be-searched path

The type of the reflective surface of the to-be-searched path may include a wall, a mirror, a ground, a reflection plate, or the like.

The location management apparatus indicates, by using the first configuration information, the information about the type of the reflective surface of the to-be-searched path. When the first apparatus searches for the path of the first signal, a type of a reflective surface of the reflection path found by the first apparatus needs to be the same as the type of the reflective surface indicated by the first configuration information as much as possible. For a solution in which the first apparatus determines the type of the reflective surface of the found reflection path, refer to the foregoing content. Details are not described again.

The type of the reflective surface may implicitly indicate a direction and/or a location of the reflective surface, or implicitly indicate the search direction of the first apparatus.

For example, if the first configuration information indicates that the type of the reflective surface of the to-be-searched path is a ground, the first apparatus needs to direct an antenna direction toward a direction of the ground for search. The first apparatus may determine the direction of the ground based on a sensor configured for the first apparatus.

For another example, if the first configuration information indicates that the type of the reflective surface of the to-be-searched path is a wall, the first apparatus needs to direct the antenna direction toward a direction of the wall for search. The first apparatus may determine the direction of the wall based on the sensor configured for the first apparatus. For example, the wall may be located in a direction perpendicular to the ground, or the wall may be located in a horizontal direction.

**Information B1.1.2:** information that indicates a material of the reflective surface of the to-be-searched path

The material of the reflective surface of the to-be-searched path may include cement, wood, metal, glass, or the like. The information about the material of the reflective surface indicates a property or a surface condition of the reflective surface, and is related to reflected energy.

The location management apparatus indicates, by using the first configuration information, the information about the material of the reflective surface of the to-be-searched path. When the first apparatus searches for the path of the first signal, a material of a reflective surface of the reflection path found by the first apparatus needs to be the same as the material of the reflective surface indicated by the first configuration information as much as possible. For a solution in which the first apparatus determines the material of the reflective surface of the found reflection path, refer to the foregoing content. Details are not described again.

The material of the reflective surface may implicitly indicate the direction and/or the location of the reflective surface, or implicitly indicate the search direction of the first apparatus. For example, if the first configuration information indicates that the material of the reflective surface of the to-be-searched path is cement, the first apparatus infers that the reflective surface is the ground, and the first apparatus needs to direct the antenna direction toward the direction of the ground for search.

For another example, if the first configuration information indicates that the material of the reflective surface of the to-be-searched path is glass, it is inferred that the reflective surface is a wall, and the first apparatus needs to direct the antenna direction toward the direction of the wall for search.

**Information B1.1.3:** information that indicates a reflectivity of the reflective surface of the to-be-searched path

For the information about the reflectivity of the reflective surface, refer to the related content of the information A1.1.3. Details are not described again.

The location management apparatus indicates, by using the first configuration information, the information about the reflectivity of the reflective surface of the to-be-searched path. When the first apparatus searches for the path of the first signal, a reflectivity of a reflective surface of the reflection path found by the first apparatus needs to be within a range of the reflectivity of the reflective surface indicated by the first configuration information. For a solution in which the first apparatus determines the reflectivity of the reflective surface of the found reflection path, refer to the foregoing content. Details are not described again.

The reflectivity of the reflective surface may implicitly indicate the direction and/or the location of the reflective surface, or implicitly indicate the search direction of the first apparatus. For example, if the first configuration information indicates that the reflectivity of the reflective surface of the to-be-searched path is low, the first apparatus infers that the reflective surface is the ground, and the first apparatus needs to direct the antenna direction toward the direction of the ground for search.

For another example, if the first configuration information indicates that the reflectivity of the reflective surface of the to-be-searched path is high, it is inferred that the reflective surface is the wall (for example, a wall made of a mirror material), and the first apparatus needs to direct the antenna direction toward the direction of the wall for search.

**Information B1.1.4:** information that indicates reflected energy of the reflective surface of the to-be-searched path

For the information about the reflected energy of the reflective surface, refer to the related content of the information A1.1.4. Details are not described again.

The location management apparatus indicates, by using the first configuration information, the information about the reflected energy of the reflective surface of the to-be-searched path. When the first apparatus searches for the path of the first signal, reflected energy of a reflective surface of the reflection path found by the first apparatus needs to be within a range of the reflected energy of the reflective surface indicated by the first configuration information. For a solution in which the first apparatus determines the reflected energy of the reflective surface of the found reflection path, refer to the foregoing content. Details are not described again.

The reflected energy of the reflective surface may implicitly indicate the direction and/or the location of the reflective surface, or implicitly indicate the search direction of the first apparatus. For example, if the first configuration information indicates that the reflected energy of the reflective surface of the to-be-searched path is low, the first apparatus infers that the reflective surface is the ground, and the first apparatus needs to direct the antenna direction toward the direction of the ground for search.

For another example, if the first configuration information indicates that the reflected energy of the reflective surface of the to-be-searched path is high, it is inferred that the reflective surface is the wall (for example, the wall made of the mirror material), and the first apparatus needs to direct the antenna direction toward the direction of the wall for search.

**Information B1.1.5:** information that indicates a surface feature of the reflective surface of the to-be-searched path

For the information about the surface feature of the reflective surface, refer to the related content of the information A1.1.5. Details are not described again.

The location management apparatus indicates, by using the first configuration information, the information about the surface feature of the reflective surface of the to-be-searched path. When the first apparatus searches for the path of the first signal, a surface feature of a reflective surface of the reflection path found by the first apparatus needs to match the surface feature of the reflective surface indicated by the first configuration information. For example, roughness indicated by the surface feature of the reflective surface of the reflection path found by the first apparatus needs to be within a range of roughness indicated by the surface feature of the reflective surface indicated by the first configuration information. For a solution in which the first apparatus determines the surface feature of the reflective surface of the found reflection path, refer to the foregoing content. Details are not described again.

The surface feature of the reflective surface may implicitly indicate the direction and/or the location of the reflective surface, or implicitly indicate the search direction of the first apparatus. For example, if the first configuration information indicates that the surface feature of the reflective surface of the to-be-searched path indicates that the reflective surface is rough, the first apparatus infers that the reflective surface is the ground, and the first apparatus needs to direct the antenna direction toward the direction of the ground for search.

For another example, if the first configuration information indicates that the surface feature of the reflective surface of the to-be-searched path indicates that the reflective surface is smooth, it is inferred that the reflective surface is the wall (for example, the wall made of the mirror material), and the first apparatus needs to direct the antenna direction toward the direction of the wall for search.

**Information B1.1.6:** information that indicates a direction of the reflective surface of the to-be-searched path

In a possible example, the information that indicates the direction of the reflective surface of the to-be-searched path may indicate the orientation of the reflective surface, or indicate a direction of a normal vector of the reflective surface, or indicate a direction of the reflective surface relative to the first apparatus.

The first apparatus performs search based on the information about the direction of the reflective surface that is configured by using the first configuration information. A direction of a reflective surface of the path found by the first apparatus matches the direction of the reflective surface indicated by the first configuration information. For example, the direction of the reflective surface of the path found by the first apparatus is within a direction range of the reflective surface indicated by the first configuration information, or the direction of the reflective surface of the path found by the first apparatus is the same as the direction of the reflective surface indicated by the first configuration information.

For example, the direction of the reflective surface configured by using the first configuration information is a direction toward the sky, or the reflective surface configured by using the first configuration information is located right below the first apparatus (the information may be understood as information about the direction of the reflective surface relative to the first apparatus), or the direction of the normal vector of the reflective surface configured by using the first configuration information is a direction toward the earth center. In these cases, an antenna module of the first apparatus directs a beam to the earth center direction, to search for the path of the at least one first signal, and a direction of a reflective surface of an obtained path is also the direction toward the sky.

For another example, the direction (or the orientation) of the reflective surface configured by using the first configuration information is a direction perpendicular to the earth center, or the direction of the reflective surface configured by using the first configuration information is a direction parallel to the ground, or the direction of the normal vector of the reflective surface configured by using the first configuration information is a direction perpendicular to the earth center. In these cases, the antenna module of the first apparatus directs the beam to the direction of the wall.

For another example, the reflective surface configured by using the first configuration information is located in the east of the first apparatus (east is a term indicating an orientation, and may alternatively be replaced with another term indicating an orientation, for example, west, south, north, or southwest) (the information may be understood as information about a direction of the reflective surface relative to the first apparatus). In these cases, the antenna module of the first apparatus directs the beam to the east (if the reflective surface indicated by the first configuration information is located in another direction (for example, west) of the first apparatus, the antenna module of the first apparatus directs the beam to the direction (for example, west)).

For another example, the direction of the reflective surface configured by using the first configuration information includes the angle information of the reflective surface. For the angle information of the reflective surface, refer to the related content of the information A 1.1.4. Details are not described again.

For example, if the first configuration information indicates that the direction of the reflective surface is 45 degrees in the southeast direction, the first apparatus directs the direction of the antenna module toward 45 degrees in the southeast direction for search.

For another example, the first configuration information indicates the angle range of the to-be-searched path, and the first apparatus directs the antenna module toward the angle range. It may also be understood as that the antenna module of the first apparatus performs search within the angle range, to obtain the reflection path.

For another example, the first configuration information indicates the angle or the direction of the to-be-searched path (the angle or the direction may be pre-configured in the first apparatus, or may be configured by another apparatus for the first apparatus), and the first apparatus directs the antenna module toward the angle or the direction. It may also be understood as that the antenna module of the first apparatus performs search in the angle or the direction (for example, the direction may be a horizontal direction), to obtain the reflection path.

In a possible example, after obtaining the angle or the direction, the first apparatus may alternatively determine an angle range of the to-be-searched path based on the angle or the direction. For example, a direction (for example, a horizontal direction or a due north direction) is set as a reference, and the angle range of the to-be-searched path is ±15 degrees (15 degrees are an example, and there may alternatively be another value) from the reference. For related content, refer to the related descriptions of the information A1.1.6. Details are not described again.

**Information B1.1.7:** information that indicates a location of the reflective surface of the to-be-searched path

The information about the location of the reflective surface of the to-be-searched path may indicate an orientation of the reflective surface of the to-be-searched path of the first apparatus, or indicate an orientation of the reflective surface relative to the first apparatus. For example, the information about the location of the reflective surface of the to-be-searched path may indicate coordinates of the reflective surface or a relative distance between the reflective surface and a terminal. For related content, refer to the related descriptions of the information B1.1.7. Details are not described again.

For example, the first configuration information indicates that the information about the location of the to-be-searched path is 45 degrees in the southeast direction of the first apparatus. In this case, the first apparatus performs search in 45 degrees in the southeast direction, and finds a reflection path (the reflection path is a path in the plurality of paths measured by the first apparatus). In this case, information about a location of a reflective surface of the reflection path indicates that the reflective surface is located in the southeast direction of the first apparatus. For another example, if the first configuration information indicates that the reflective surface of the to-be-searched path is located on the ground, the first apparatus performs search on the ground. For another example, if the first configuration information indicates that the reflective surface of the to-be-searched path is located on the wall, and the wall may be a surface perpendicular to the ground, the first apparatus performs search on the wall.

**Information B1.2:** angle information of the to-be-searched path

The angle information of the to-be-searched path may include information such as a direction of arrival of the to-be-searched path.

The angle information of the to-be-searched path may include an angle range, and the angle range may be a search range for the first apparatus to find the path, or may be referred to as an angle search range of the first apparatus.

For example, the first configuration information indicates that the angle range of the to-be-searched path is 42 degrees to 48 degrees in the southeast direction. The first apparatus performs search in the southeast direction, and a search range is 42 degrees to 48 degrees in the southeast direction of the first apparatus.

For another example, the first configuration information indicates that the angle range of the to-be-searched path is 45 degrees in the southeast direction. The first apparatus performs search in 45 degrees in the southeast direction. In another possible example, the first apparatus may alternatively perform search in a range of 42 degrees to 48 degrees in the southeast direction. 42 degrees to 48 degrees may be considered as an angle range determined by the first apparatus based on 45 degrees, and 42 degrees and 48 degrees are obtained by adding and subtracting 3 degrees from 45 degrees, where 3 degrees are an example, and may be replaced with another value.

**Information B1.3:** type information of the to-be-searched path

Types of the to-be-searched path may include a first path or another path. The types of the to-be-searched path may further include a reflection path or a direct path. For the type information of the to-be-searched path, refer to the related content of the information A1.3. Details are not described again.

The first apparatus may perform search based on the type of the path indicated by the first configuration information, and a type of a path found by the first apparatus is the same as the type of the path configured by using the first configuration information.

**Information B1.4:** ranking of the to-be-searched path when the paths of the at least one first signal are sorted based on the order of the times of arrival

For example, the first configuration information indicates that to-be-searched paths are a first arrival path and a second arrival path. In this case, the first apparatus may use the found first arrival path and second arrival path of the at least one first signal as paths in the plurality of paths indicated in the first information.

For content of the information B1.4, refer to the related content of the information A1.4. Details are not described again.

**Information B1.5:** ranking of the path in the plurality of paths when the paths of the at least one first signal are sorted based on the order of the receive power strengths

For example, the first configuration information indicates that to-be-searched paths are a first strongest path and a second strongest path. In this case, the first apparatus may use the found first strongest path and second strongest path of the at least one first signal as paths in the plurality of paths indicated in the first information.

For content of the information B1.5, refer to the related content of the information A1.5. Details are not described again.

**Step 702:** The third apparatus sends the at least one first signal.

Correspondingly, the first apparatus receives the at least one first signal.

For step 702, refer to the related content of step 501. Details are not described again.

**Step 703:** The first apparatus measures the at least one first signal based on the first configuration information, to obtain the measurement results of the plurality of paths of the at least one first signal.

For the measurement results of the plurality of paths, refer to the foregoing related content. Details are not described again.

**Step 704:** The first apparatus determines first information based on the measurement results of the plurality of paths of the at least one first signal.

For step 704, refer to the related content of step 502. Details are not described again.

**Step 705:** The first apparatus sends the first information.

Correspondingly, the location management apparatus receives the first information.

In a possible example, the first information may be carried in LPP provide location information.

For step 705, refer to the related content of step 503. Details are not described again.

**Step 706:** The location management apparatus sends second information based on the first information.

Correspondingly, the second apparatus receives the second information.

In a possible example, the second information may be carried in a new radio positioning protocol annex (new radio positioning protocol annex, NRPPa) positioning information request.

The second information is used to assist the second apparatus in configuring, for the first apparatus, a reference signal used for positioning. A second signal and a third signal in this embodiment of this application are two examples of the reference signal that is configured by the second apparatus for the first apparatus and that is used for positioning. The second signal and the third signal are, for example, SRSs.

The second information is obtained based on the measurement results of the plurality of paths of the at least one first signal received by the first apparatus. Alternatively, the second information may be determined based on the first information. The second information may include the following information C1 and/or information C2.

**Information C1:** information that indicates transmission directions of the plurality of paths

The information C1 may be understood as information that is in the first information and that indicates the transmission directions of the plurality of paths, and the information that indicates the transmission directions of the plurality of paths may include information that indicates reflective surfaces of the paths and/or information that indicates the paths. The information C1 may include content in the information A1. Details are not described again.

**Information C2:** fourth information

The fourth information may indicate spatial relations of reference signals (for example, the second signal and the third signal) that are configured for the first apparatus and that are used for positioning. A quantity of reference signals that are configured for the first apparatus and that are used for positioning may be associated with a quantity of paths in the plurality of paths obtained by the first apparatus by measuring the at least one first signal. For example, the quantity of paths in the plurality of paths obtained by the first apparatus by measuring the at least one first signal is equal to (or greater than) the quantity of reference signals that are configured for the first apparatus and that are used for positioning. Each reference signal that is configured for the first apparatus and that is used for positioning may be associated with a spatial relation of one of the plurality of paths.

For example, the reference signals that are configured for the first apparatus and that are used for positioning include the second signal and the third signal, and the fourth information indicates that the second signal is associated with a spatial relation of a first path. The fourth information further indicates that the third signal is associated with a spatial relation of a second path.

In this embodiment of this application, signals received by the first apparatus are collectively referred to as first signals. There may be one or more first signals. For example, a plurality of first signals are a plurality of PRSs.

In this application, the first path and the second path may not be paths in the plurality of paths indicated by the first information obtained by the first apparatus, for example, may be two paths specified by a network apparatus for the first apparatus, or the first path and the second path are not paths corresponding to the at least one first signal. In another possible implementation, the first path and the second path are paths in the plurality of paths indicated by the first information obtained by the first apparatus, or the first path and the second path are two paths corresponding to the at least one first signal measured by the first apparatus.

In this embodiment of this application, the first path and the second path are paths corresponding to a same first signal. For example, the first apparatus measures one first signal, to obtain the first path and the second path. Alternatively, the first path and the second path are paths corresponding to two different first signals. In this case, the first apparatus may measure one first signal to obtain the first path, and the first apparatus measures the other first signal to obtain the second path. Both the first path and the second path may be direct paths or other paths.

For example, the second apparatus sends a first signal, where the first path of the first signal is a direct path, and the second path is a reflection path reflected by the ground. For another example, the second apparatus sends a first signal, where the first path of the first signal is a direct path. The second apparatus further sends a first signal, where the second path is a reflection path of the first signal reflected by the wall. In these cases, the second apparatus needs to configure at least two reference signals for the first apparatus, for example, the second signal and the third signal. The first apparatus directs a transmit beam of the second signal toward a direction of the first path, and directs a transmit beam of the third signal toward a direction of the second path. In this way, an RTT corresponding to the second signal and the first path, and an RTT corresponding to the second signal and the second path may be used to more accurately calculate location information of the first apparatus, and better eliminate an error in an RTT calculation process.

The second information may assist the second apparatus in configuring, for the first apparatus, spatial relations of reference signals (for example, the second signal and the third signal) that are used for positioning. When the second information includes the fourth information, the location management device may determine, based on the first information, the spatial relations of the reference signals (for example, the second signal and the third signal) that are sent by the first apparatus and that are used for positioning, and send indication information of the spatial relations to the second apparatus, so that the second apparatus sends the spatial relations to the first apparatus.

The second information may alternatively include other information, for example, the quantity of paths in the plurality of paths reported by the first apparatus, to assist the second apparatus in configuring, for the first apparatus, the reference signals used for positioning.

In this embodiment of this application, that a signal is associated with a spatial relation of a path may be understood in a plurality of manners. An example in which the second signal is associated with the spatial relation of the first path is used for description below. Content in which the third signal is associated with the spatial relation of the second path is similar, and details are not described.

In this embodiment of this application, that the second signal is associated with the spatial relation of the first path of the first signal may also be referred to as that a spatial relation of the second signal and the first signal are associated (or have an association relationship), or may be referred to as that a spatial relation of the second signal and a spatial relation of the first signal are associated (or have an association relationship). In this embodiment of this application, that the second signal is associated with the spatial relation of the first path of the first signal may also be understood as that a propagation direction of the second signal is associated with the spatial relation of the first path of the first signal, or there is an association relationship between a sending direction of the second signal and a direction for receiving the first path of the first signal (for example, the two directions are consistent or close), or a transmit beam direction of the second signal is associated with a propagation direction of the first path of the first signal (for example, the two directions are consistent or close), or a transmit beam direction of the second signal is associated with a transmit beam direction of the first path of the first signal (for example, the two directions are consistent or close).

In this embodiment of this application, there are a plurality of specific forms of the fourth information. An example in which the first information indicates that the second signal is associated with the spatial relation of the first path is used for description below. Content in which the fourth information indicates that the third signal is associated with the spatial relation of the second path is similar, and details are not described. For example, the fourth information includes identification information of the first path of the first signal. In this way, the second apparatus may determine, based on the identification information of the first path of the first signal, that the spatial relation of the second signal is associated with the spatial relation of the first path of the first signal. In another possible implementation, the fourth information includes spatial relation configuration information, the spatial relation configuration information is used to configure the spatial relation of the second signal, English of the spatial relation configuration information may be, for example, spatial relation information, and the spatial relation configuration information may include the identification information of the first path of the first signal. In this way, the second apparatus may determine that the spatial relation of the second signal is associated with the spatial relation of the first path of the first signal by determining that the identification information of the first path of the first signal exists in the spatial relation configuration information included in the first configuration information.

**Step 707:** The second apparatus sends second configuration information based on the second information.

Correspondingly, the first apparatus receives the second configuration information.

The second configuration information may indicate spatial relations of reference signals (for example, the second signal and the third signal) that are configured for the first apparatus and that are used for positioning. For example, the second configuration information indicates that the second signal is associated with the spatial relation of the first path, and the second configuration information further indicates that the third signal is associated with the spatial relation of the second path. The second configuration information is used by the first apparatus to send the second signal and the third signal.

If the second information includes the information C1, the second apparatus may configure, based on the information C1, a spatial relation for a reference signal that is to be sent by the first apparatus and that is used for positioning. If the second information includes the information C2, namely, the fourth information, the second configuration information may directly include the spatial relation that is indicated by the fourth information and that is configured for the reference signal that is to be sent by the first apparatus and that is used for positioning

For the spatial relation that is included in the second configuration information and that is configured for the reference signal that is to be sent by the first apparatus and that is used for positioning, refer to the related content of the spatial relation indicated in the fourth information. Details are not described again.

The second apparatus may alternatively configure, for the first apparatus based on other information, the reference signal used for positioning. For example, the second apparatus may determine, based on the quantity of the plurality of paths obtained by the first apparatus by measuring the at least one first signal, the quantity of reference signals that are configured for the first apparatus and that are used for positioning. For example, the two quantities may be equal. Other configuration information of the reference signal used for positioning may be carried in the second configuration information and sent to the first apparatus, or may be separately sent to the first apparatus.

In another possible implementation, the second apparatus does not need to configure, for the first apparatus, the spatial relation of the reference signal that is to be sent by the first apparatus and that is used for positioning. The first apparatus may determine, based on the first information, the spatial relation of the to-be-sent reference signal that is used for positioning (or the first apparatus generates the second configuration information based on the measurement results of the plurality of paths of the at least one first signal). In this case, the second apparatus may not need to send, to the first apparatus, the information that indicates the spatial relation of the reference signal that is to be sent by the first apparatus and that is used for positioning. For example, step 707 may not be performed, or the second configuration information in step 707 may not include the spatial relation of the reference signal that is configured for the first apparatus and that is used for positioning.

**Step** 708: The first apparatus sends the second signal and the third signal based on the second configuration information.

Correspondingly, the third apparatus receives the second signal and the third signal.

**Step 709:** The third apparatus determines third information based on a measurement result of the second signal and a measurement result of the third signal.

The third information may include the measurement result of the second signal and the measurement result of the third signal, or may include some parameters determined based on the measurement result of the second signal and/or the measurement result of the third signal. The third information is used for positioning.

The measurement result of the second signal may include some parameters used for positioning, and these parameters may correspond to positioning technologies. For example, an RTT positioning technology is used to position the first apparatus. The measurement result of the second signal may include a value of a first RTT (or referred to as information about a round trip time corresponding to the second signal), or may include some parameters used to determine the value of the first RTT. The first RTT may be obtained according to the following formula: [(time at which the second signal arrives at the third apparatus - time at which the third apparatus sends the first signal) - (time at which the first path of the first signal arrives at the first apparatus - time at which the first apparatus sends the second signal)]. The measurement result of the second signal may include information that indicates a sending time of the first path of the first signal and/or information about the time at which the second signal arrives at the third apparatus (or referred to as information about a time of arrival of the second signal). The measurement result of the second signal may further include information that indicates a phase difference or an angle of arrival of the second signal, or the like. When the measurement result of the second signal includes the value of the first RTT, the third apparatus may obtain, from another apparatus (for example, the first apparatus), some parameters used to calculate the first RTT (for example, the time at which the first path of the first signal arrives at the first apparatus, and the time at which the first apparatus sends the second signal).

Similarly, the measurement result of the third signal may include some parameters used for positioning, and these parameters may correspond to positioning technologies. For example, an RTT positioning technology is used to position the first apparatus. The measurement result of the third signal may include a value of a second RTT (or referred to as information about a round trip time corresponding to the third signal), or may include some parameters used to determine the value of the second RTT. The second RTT may be obtained according to the following formula: [(time at which the third signal arrives at the third apparatus - time at which the third apparatus sends the first signal) - (time at which the second path of the first signal arrives at the first apparatus - time at which the first apparatus sends the third signal)]. The measurement result of the third signal may include information that indicates a sending time of the second path of the first signal and/or information about the time at which the third signal arrives at the third apparatus (or referred to as information about a time of arrival of the third signal). The measurement result of the third signal may further include information that indicates a phase difference or an angle of arrival of the third signal, or the like. When the measurement result of the third signal includes the value of the second RTT, the third apparatus may obtain, from another apparatus (for example, the first apparatus), some parameters used to calculate the second RTT (for example, the time at which the second path of the first signal arrives at the first apparatus, and the time at which the first apparatus sends the third signal).

In this embodiment of this application, the location management apparatus and the third apparatus may be on a same device, or may be on different devices. When the location management apparatus and the third apparatus belong to a same device, the third apparatus may have a positioning function. For example, the third apparatus may determine the location information of the first apparatus with reference to the third information (in this case, the following step 710 and step 711 may not be performed in the solution in FIG. 7). When the location management apparatus and the third apparatus do not belong to a same device, the third apparatus may send the third information to the location management apparatus, so that the location management apparatus determines the location information of the first apparatus with assistance of the third information. For example, the method procedure in FIG. 7 may include the following step 710 and step 711.

**Step 710:** The third apparatus sends the third information.

Correspondingly, the location management apparatus receives the third information.

In a possible example, the third information may be carried in an NRPPa measurement response.

**Step 711:** The location management apparatus determines location information of a to-be-positioned apparatus based on the first information and the third information.

Step 711 may be considered as an implementation of step 504. In step 711, because the location management apparatus may determine the location information of the to-be-positioned apparatus (for example, the first apparatus) with reference to more information, positioning accuracy can be further improved.

In the embodiment shown in FIG. 7, the first apparatus measures the received at least one first signal, and may obtain a direct path or obtain a reflection path through measurement. The direct path is not blocked, so the direct path has strong energy, and can be easily measured by the first apparatus. However, the reflection path is difficult to measure because a propagation path is long and a path loss is large. In the embodiment provided in FIG. 7, the first configuration information may indicate an orientation of the to-be-searched path of the first apparatus. Therefore, the first apparatus may direct a receive beam toward the direction indicated by the first configuration information. When an orientation of the receive beam is consistent with a direction of a to-be-received path, energy received by the first apparatus on the path is large, so that accuracy of a measurement quantity of the path can be improved.

In addition, when the location information of the first apparatus is solved based on a round trip time of a signal between the third apparatus and the first apparatus, based on the second configuration information, spatial relations of the plurality of reference signals sent by the first apparatus may be associated with the plurality of paths of the at least one first signal received by the first apparatus, so that the plurality of reference signals sent by the first apparatus may be transmitted in the transmission directions of the paths. In this way, a round trip time between the first apparatus and the third apparatus can be calculated more accurately.

Further, a plurality of round trip times are calculated, so that impact of a channel latency can be reduced, thereby improving positioning accuracy. For a specific analysis process of reducing the channel latency, refer to the foregoing descriptions of FIG. 6. Details are not described again.

Furthermore, the second apparatus may send the second configuration information based on the received second information. Because the second information is obtained based on the information about the path obtained by the first apparatus by measuring the first signal, the second apparatus may learn of, based on the second information, a specific situation of each path obtained by the first apparatus, so that the spatial relation of the reference signal can be more appropriately configured for the first apparatus.

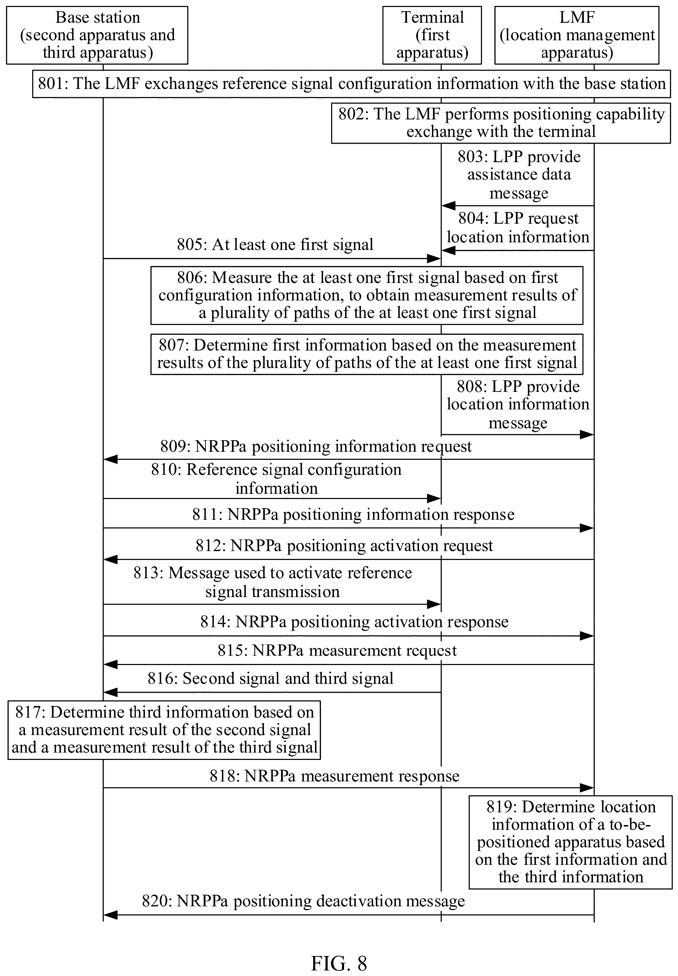

Based on embodiments shown in FIG. 1, FIG. 2A, FIG. 2B, FIG. 2C, FIG. 2D, FIG. 2E, FIG. 3, FIG. 4, FIG. 5, FIG. 6, and FIG. 7 and the foregoing other content, **FIG. 8** is an example of a schematic flowchart of a communication method according to an embodiment of this application. FIG. 8 may be considered as an extended embodiment of the embodiment in FIG. 5 and/or the embodiment in FIG. 7. FIG. 8 may be understood as a manner of combining a solution provided in an embodiment of this application with an existing standard. Information in this embodiment of this application may be transmitted in a newly defined message, or may be transmitted in a currently defined message.

In FIG. 8, an example in which a first apparatus is a terminal, a second apparatus and a third apparatus are a same base station, and a location management apparatus is an LMF is used for description. The first apparatus, the second apparatus, the third apparatus, and the location management apparatus may also be as the content described in FIG. 4. Details are not described again.

As shown in FIG. 8, the method includes the following steps.

**Step 801:** The LMF exchanges reference signal configuration information with the base station.

In step 801, the LMF may obtain the reference signal (for example, a first signal (for example, a PRS)) configuration information from the base station, for example, a time-frequency domain resource of a reference signal, to subsequently send the reference signal configuration information to the terminal. When the first signal sent by the base station is a PRS, the step of interaction between the base station and the LMF in step 801 may be NRPPa PRS configuration information exchange in English.

**Step 802:** The LMF performs positioning capability exchange with the terminal.

In step 802, the LMF may know a positioning capability of the terminal, and may learn which positioning technologies are supported by the terminal, which parameters can be measured by the terminal, and the like. These parameters are used for positioning. These parameters may include, for example, an RTT and an angle of arrival.

**Step 803:** The location management apparatus sends an LPP provide assistance data message to the terminal.

Correspondingly, the first apparatus receives the LPP provide assistance data message.

In a possible example, third configuration information may be carried in LPP provide assistance data, and the LPP provide assistance data may be written as LPP provide assistance data in English.

In this embodiment of this application, the third configuration information is used to configure at least one first signal. The third configuration information may include identification information of the at least one first signal. The identification information of the first signal may include information that can indicate the first signal, for example, may include one or more of resource information of the first signal, a cell index corresponding to the first signal, an index of the first signal, configuration information of the first signal, or the like. For example, the first signal is a PRS, and the identification information of the first signal may include one or more of an identifier of the PRS, a resource set index of the PRS, or a resource index of the PRS.

**Step 804:** The location management apparatus sends LPP request location information to the terminal.

Correspondingly, the terminal receives the LPP request location information.

The LPP request location information may be written as LPP request location information in English. First configuration information may be carried in the LPP request location information.

For step 804, refer to the related content of step 701. Details are not described again.

**Step 805:** The base station sends the at least one first signal.

Correspondingly, the terminal receives the at least one first signal.

For step 805, refer to the related content of step 702. Details are not described again.

**Step 806:** The terminal measures the at least one first signal, to obtain measurement results of a plurality of paths of the at least one first signal.

For step 806, refer to the related content of step 703. Details are not described again.

**Step 807:** The terminal determines first information based on the measurement results of the plurality of paths of the at least one first signal.

For step 807, refer to the related content of step 704. Details are not described again.

**Step 808:** The terminal sends an LPP provide location information message.

Correspondingly, the LMF receives the LPP provide location information message.

The LPP provide location information message may be LPP provide location information in English.

The first information may be carried in the LPP provide location information message. In another possible implementation, the measurement results (the foregoing information A2) of the at least one first signal obtained by the terminal in this embodiment of this application and information (the information A1) that indicates transmission directions of the plurality of paths may be separately sent in two messages, or may be sent in one message.

For step 808, refer to the related content of step 705. Details are not described again.

**Step 809:** The LMF sends an NRPPa positioning information request.

Correspondingly, the base station receives the NRPPa positioning information request.

The NRPPa positioning information request may be written as NRPPa positioning information request in English. Second information may be carried in the NRPPa positioning information request.

For step 809, refer to the related content of step 706. Details are not described again.

**Step 810:** The base station sends the reference signal configuration information.

Correspondingly, the first apparatus receives the reference signal configuration information.

When the reference signal sent by the terminal is an SRS, the reference signal configuration information may alternatively be UE SRS configuration information. Second configuration information may be carried in the reference signal configuration information. Alternatively, the second configuration information and the reference signal configuration information may be separately sent.

Before step 801, a step of determining, by the base station, a resource of the reference signal sent by the terminal may be further included.

For step 810, refer to the related content of step 707. Details are not described again.

**Step 811:** The base station sends an NRPPa positioning information response to the LMF.

Correspondingly, the LMF receives the NRPPa positioning information response.

The NRPPa positioning information response may be considered as a response message of the NRPPa positioning information request. The NRPPa positioning information response may be written as NRPPa positioning information response in English.

**Step 812:** The LMF sends an NRPPa positioning activation request to the base station.

Correspondingly, the base station receives the NRPPa positioning activation request.

The NRPPa positioning activation request may indicate the base station to activate transmission of the reference signal on a terminal side. The NRPPa positioning activation request may be written as NRPPa positioning activation request in English.

**Step 813:** The base station sends, to the terminal, a message used to activate reference signal transmission.

Correspondingly, the terminal receives the message used to activate the reference signal transmission.

If the reference signal sent by the terminal is an SRS, the message used to activate the reference signal transmission may be written as activate SRS transmission in English.

**Step 814:** The base station sends an NRPPa positioning activation response to the LMF.

Correspondingly, the LMF receives the NRPPa positioning activation response sent by the base station.

The NRPPa positioning activation response may be considered as a response message of the NRPPa positioning activation request. The NRPPa positioning activation response may be written as NRPPa positioning activation response in English.

**Step 815:** The LMF sends an NRPPa measurement request to the base station.

Correspondingly, the base station receives the NRPPa measurement request.

The NRPPa measurement request may be written as NRPPa measurement request in English. After receiving the NRPPa measurement request, the base station may measure the reference signal received from the terminal.

**Step 816:** The terminal sends a second signal and a third signal.

Correspondingly, the base station receives the second signal and the third signal.

For step 816, refer to the related content of step 708. Details are not described again.

**Step 817:** The base station measures the second signal and the third signal, and determines third information based on a measurement result of the second signal and a measurement result of the third signal.

For step 817, refer to the related content of step 709. Details are not described again.

**Step 818:** The base station sends an NRPPa measurement response.

Correspondingly, the LMF receives the NRPPa measurement response.

The NRPPa measurement response may be referred to as NRPPa measurement response in English. The third information may be carried in the NRPPa measurement response. The NRPPa measurement response may be considered as a response message of the NRPPa measurement request.

For step 818, refer to the related content of step 710. Details are not described again.

**Step 819:** The LMF determines location information of a to-be-positioned apparatus based on the first information and the third information.

For step 819, refer to the related content of step 711. Details are not described again.

**Step 820:** The LMF sends an NRPPa positioning deactivation message to the base station.

Correspondingly, the base station receives the NRPPa positioning deactivation message. The NRPPa positioning deactivation message may be written as NRPPa positioning deactivation in English. The NRPPa positioning deactivation message may be used to deactivate this positioning procedure between the base station and the terminal. After receiving the message, the base station may no longer send the first signal.

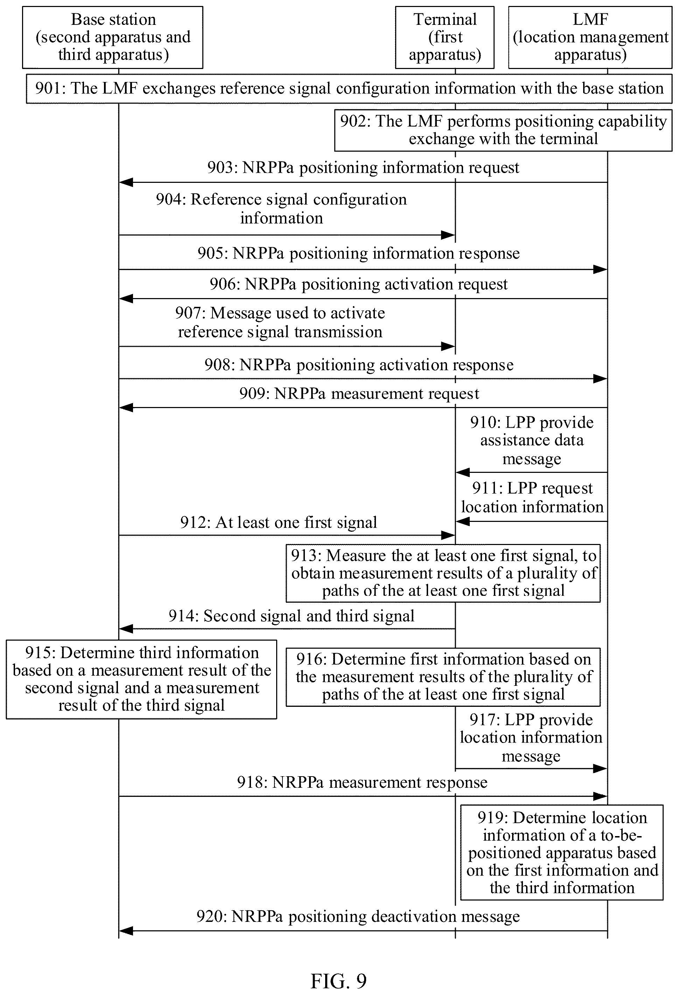

Based on embodiments shown in FIG. 1, FIG. 2A, FIG. 2B, FIG. 2C, FIG. 2D, FIG. 2E, FIG. 3, FIG. 4, FIG. 5, FIG. 6, FIG. 7, and FIG. 8 and the foregoing other content, FIG. 9 is an example of a schematic flowchart of a communication method according to an embodiment of this application. FIG. 9 may be considered as another possible embodiment of the embodiment in FIG. 8.

A difference from FIG. 8 lies in that an order of the steps in FIG. 8 may be adjusted. FIG. 9 shows an example obtained by adjusting the order of the steps in FIG. 8. In FIG. 9, after the step adjustment, a time at which a terminal measures a first signal may be closer to times at which a base station measures a second signal and a third signal. Because the terminal may be always in a moving process, when a time at which the terminal measures a reference signal is closer to a time at which the base station measures the reference signal, an error in the positioning process can be further reduced, and positioning accuracy can be improved.

In FIG. 9, an example in which a first apparatus is a terminal, a second apparatus and a third apparatus are a same base station, and a location management apparatus is an LMF is used for description. The first apparatus, the second apparatus, the third apparatus, and the location management apparatus may also be as the content described in FIG. 4. Details are not described again.

As shown in FIG. 9, the method includes the following steps.

**Step 901:** The LMF exchanges reference signal configuration information with the base station.

For step 901, refer to the related content of step 801. Details are not described again.

**Step 902:** The LMF performs positioning capability exchange with the terminal.

For step 902, refer to the related content of step 802. Details are not described again.

**Step 903:** The LMF sends an NRPPa positioning information request.

Correspondingly, the base station receives the NRPPa positioning information request.

In the solution shown in FIG. 9, before sending the NRPPa positioning information request, the LMF has not obtained information about a reflective surface of a path measured by the terminal. Therefore, the LMF may not send second information, or it may be understood that the second information is not carried in the NRPPa positioning information request. In this case, the terminal may configure spatial relations of a second signal and a third signal.

For step 903, refer to the related content of step 809. Details are not described again.

**Step 904:** The base station sends the reference signal configuration information.

Correspondingly, the first apparatus receives the reference signal configuration information.

In the solution shown in FIG. 9, before sending the reference signal configuration information, the base station has not obtained the information about the reflective surface of the path measured by the terminal. Therefore, the base station may not configure a spatial relation for a reference signal to be sent by the terminal. In this case, the terminal may configure spatial relations of the second signal and the third signal. The reference signal configuration information may not include second configuration information.

For step 904, refer to the related content of step 810. Details are not described again.

**Step 905:** The base station sends an NRPPa positioning information response to the LMF.

Correspondingly, the LMF receives the NRPPa positioning information response.

For step 905, refer to the related content of step 811. Details are not described again.

**Step 906:** The LMF sends an NRPPa positioning activation request to the base station.

Correspondingly, the base station receives the NRPPa positioning activation request.

For step 906, refer to the related content of step 812. Details are not described again.

**Step 907:** The base station sends, to the terminal, a message used to activate reference signal transmission.

Correspondingly, the terminal receives the message used to activate the reference signal transmission.

For step 907, refer to the related content of step 813. Details are not described again.

**Step 908:** The base station sends an NRPPa positioning activation response to the LMF.

Correspondingly, the LMF receives the NRPPa positioning activation response sent by the base station.

For step 908, refer to the related content of step 814. Details are not described again.

**Step 909:** The LMF sends an NRPPa measurement request to the base station.

Correspondingly, the base station receives the NRPPa measurement request.

For step 909, refer to the related content of step 815. Details are not described again.

**Step 910:** The location management apparatus sends an LPP provide assistance data message to the terminal.

Correspondingly, the first apparatus receives the LPP provide assistance data message.

For step 910, refer to the related content of step 803. Details are not described again.

**Step 911:** The location management apparatus sends LPP request location information to the terminal.

Correspondingly, the terminal receives the LPP request location information.

For step 911, refer to the related content of step 804. Details are not described again.

**Step 912:** The base station sends the at least one first signal.

Correspondingly, the terminal receives the at least one first signal.

For step 912, refer to the related content of step 805. Details are not described again.

**Step 913:** The terminal measures the at least one first signal, to obtain measurement results of a plurality of paths of the at least one first signal.

For step 913, refer to the related content of step 806. Details are not described again.

**Step 914:** The terminal sends a second signal and a third signal.

Correspondingly, the base station receives the second signal and the third signal.

For step 914, refer to the related content of step 816. Details are not described again.

**Step 915:** The base station measures the second signal and the third signal, and determines third information based on a measurement result of the second signal and a measurement result of the third signal.

For step 915, refer to the related content of step 817. Details are not described again.

**Step 916:** The terminal determines first information based on the measurement results of the plurality of paths of the at least one first signal.

For step 916, refer to the related content of step 807. Details are not described again.

**Step 917:** The terminal sends an LPP provide location information message.

Correspondingly, the LMF receives the LPP provide location information message.

For step 917, refer to the related content of step 808. Details are not described again.

**Step 918:** The base station sends an NRPPa measurement response.

Correspondingly, the LMF receives the NRPPa measurement response.

For step 918, refer to the related content of step 818. Details are not described again.

**Step 919:** The LMF determines location information of a to-be-positioned apparatus based on the first information and the third information.

For step 919, refer to the related content of step 819. Details are not described again.

**Step 920:** The LMF sends an NRPPa positioning deactivation message to the base station.

Correspondingly, the base station receives the NRPPa positioning deactivation message.

For step 920, refer to the related content of step 820. Details are not described again.

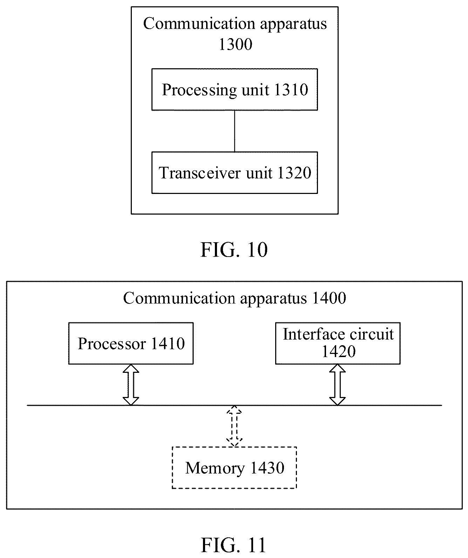

FIG. 10 and FIG. 11 are diagrams of possible structures of communication apparatuses according to embodiments of this application. These communication apparatuses may be configured to implement functions of the terminal or the base station in the foregoing method embodiments, and therefore can also implement beneficial effects of the foregoing method embodiments. In embodiments of this application, the communication apparatus may be the terminal 120 shown in FIG. 1, or may be the RAN node 110 shown in FIG. 1, or may be a module (for example, a chip) applied to the terminal 120 or the RAN node 110. The communication apparatus may be the location management device in embodiments of this application, or a module (for example, a chip) applied to the location management device.

As shown in FIG. 10, a communication apparatus 1300 includes a processing unit 1310 and a transceiver unit 1320. The communication apparatus 1300 is configured to implement functions of the terminal or the base station in the method embodiment shown in FIG. 5, FIG. 7, FIG. 8, or FIG. 9.

When the communication apparatus 1300 is configured to implement the functions of the first apparatus in the method embodiment shown in FIG. 5, FIG. 7, FIG. 8, or FIG. 9, the processing unit 1310 is configured to: receive at least one first signal through the transceiver unit 1320, and determine first information based on measurement results of a plurality of paths of the at least one first signal.

In a possible implementation, when the communication apparatus 1300 is configured to implement the functions of the first apparatus in the method embodiment shown in FIG. 5, FIG. 7, FIG. 8, or FIG. 9, the processing unit 1310 is further configured to send the first information through the transceiver unit 1320.

In a possible implementation, when the communication apparatus 1300 is configured to implement the functions of the first apparatus in the method embodiment shown in FIG. 5, FIG. 7, FIG. 8, or FIG. 9, the processing unit 1310 is further configured to: receive first configuration information through the transceiver unit 1320, and measure the at least one first signal based on the first configuration information, to obtain measurement results of the plurality of paths of the at least one first signal.

In a possible implementation, when the communication apparatus 1300 is configured to implement the functions of the first apparatus in the method embodiment shown in FIG. 5, FIG. 7, FIG. 8, or FIG. 9, the processing unit 1310 is further configured to: obtain second configuration information through the transceiver unit 1320, and send a second signal and a third signal based on the second configuration information.

When the communication apparatus 1300 is configured to implement the functions of the location management apparatus in the method embodiment shown in FIG. 5, FIG. 7, FIG. 8, or FIG. 9, the processing unit 1310 is further configured to: receive first information through the transceiver unit 1320, where the first information is determined based on measurement results of a plurality of paths of at least one first signal; and determine location information of a to-be-positioned apparatus based on the first information.

In a possible implementation, when the communication apparatus 1300 is configured to implement the functions of the location management apparatus in the method embodiment shown in FIG. 5, FIG. 7, FIG. 8, or FIG. 9, the processing unit 1310 is further configured to send first configuration information through the transceiver unit 1320.

In a possible implementation, when the communication apparatus 1300 is configured to implement the functions of the location management apparatus in the method embodiment shown in FIG. 5, FIG. 7, FIG. 8, or FIG. 9, the processing unit 1310 is further configured to send second information through the transceiver unit 1320.

In a possible implementation, when the communication apparatus 1300 is configured to implement the functions of the location management apparatus in the method embodiment shown in FIG. 5, FIG. 7, FIG. 8, or FIG. 9, the processing unit 1310 is further configured to: receive third information through the transceiver unit 1320, and determine location information of a to-be-positioned apparatus based on first information and the third information.

When the communication apparatus 1300 is configured to implement the functions of the second apparatus in the method embodiment shown in FIG. 5, FIG. 7, FIG. 8, or FIG. 9, the processing unit 1310 is further configured to: receive second information through the transceiver unit 1320, and send second configuration information based on the second information.

When the communication apparatus 1300 is configured to implement the functions of the third apparatus in the method embodiment shown in FIG. 5, FIG. 7, FIG. 8, or FIG. 9, the processing unit 1310 is further configured to: send at least one first signal through the transceiver unit 1320, and receive a second signal and a third signal.

For more detailed descriptions of the processing unit 1310 and the transceiver unit 1320, refer to the related descriptions of the method embodiment shown in FIG. 5, FIG. 7, FIG. 8, or FIG. 9.

As shown in FIG. 11, a communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430 that is configured to store instructions executed by the processor 1410, input data required by the processor 1410 to run the instructions, or data generated after the processor 1410 runs the instructions.

When the communication apparatus 1400 is configured to implement the method shown in FIG. 5, FIG. 7, FIG. 8, or FIG. 9, the processor 1410 is configured to implement a function of the processing unit 1310, and the interface circuit 1420 is configured to implement a function of the transceiver unit 1320.

When the communication apparatus is a chip used in a terminal, the terminal chip implements the functions of the terminal apparatus in the foregoing method embodiments. That the terminal chip receives information from a base station may be understood as that the information is first received by another module (for example, a radio frequency module or an antenna) in the terminal, and then sent by the module to the terminal chip. That the terminal chip sends information to the base station may be understood as that the information is first sent to another module (for example, a radio frequency module or an antenna) in the terminal, and then sent by the module to the base station.

When the communication apparatus is a chip used in a base station, the base station chip implements the functions of the network apparatus in the foregoing method embodiments. That the base station chip receives information from a terminal may be understood as that the information is first received by another module (for example, a radio frequency module or an antenna) in the base station, and then sent by the module to the base station chip. That the base station chip sends information to the terminal may be understood as that the information is first sent to another module (for example, a radio frequency module or an antenna) in the base station, and then sent by the module to the terminal.

In this application, that an entity A sends information to an entity B may be that A directly sends the information to B, or may be that A indirectly sends the information to B through another entity. Similarly, that the entity B receives information from the entity A may be that the entity B directly receives the information sent by the entity A, or may be that the entity B indirectly receives the information sent by the entity A through another entity. The entities A and B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a terminal chip and another module of the terminal, or information exchange between a base station chip and another module of the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

Method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof, to form a new embodiment.

In this application, "at least one" refers to one or more, and "a plurality of" refers to two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers (for example, numeric numbers such as "first" and "second", or letter numbers such as "parameter A", "parameter B", and "parameter C") in embodiments of this application are merely for distinguishing for ease of description, and are not intended to limit the scope of embodiments of this application. Sequence numbers of the foregoing processes do not mean an execution sequence, and the execution sequence of the processes should be determined based on functions and internal logic of the processes.

**Claims**

1. A positioning method, wherein the method is applied to a first apparatus, and the method comprises:

    receiving, by the first apparatus, at least one first signal; and
    determining, by the first apparatus, first information based on measurement results of a plurality of paths of the at least one first signal, wherein the first information comprises information that indicates reflective surfaces of the plurality of paths.

2. The method according to claim 1, wherein the information that indicates the reflective surfaces of the plurality of paths comprises at least one of the following:

    information that indicates a type of the reflective surface of the path;
    information that indicates a material of the reflective surface of the path;
    information that indicates a reflectivity of the reflective surface of the path;
    information that indicates reflected energy of the reflective surface of the path;
    information that indicates a surface feature of the reflective surface of the path;
    information that indicates a direction of the reflective surface of the path; or
    information that indicates a location of the reflective surface of the path.

3. The method according to claim 1 or 2, wherein the method further comprises:
    sending, by the first apparatus, the first information.

4. The method according to any one of claims 1 to 3, wherein before determining, by the first apparatus, the first information based on the measurement results of the plurality of paths of the at least one first signal, the method further comprises:

    receiving, by the first apparatus, first configuration information, wherein the first configuration information comprises information about a reflective surface of a to-be-searched path; and
    measuring, by the first apparatus, the at least one first signal based on the first configuration information, to obtain the measurement results of the plurality of paths of the at least one first signal.

5. The method according to claim 4, wherein the information about the reflective surface of the to-be-searched path comprises at least one of the following:

    information that indicates a type of the reflective surface of the to-be-searched path;
    information that indicates a material of the reflective surface of the to-be-searched path;
    information that indicates a reflectivity of the reflective surface of the to-be-searched path;
    information that indicates reflected energy of the reflective surface of the to-be-searched path;
    information that indicates a surface feature of the reflective surface of the to-be-searched path;
    information that indicates a direction of the reflective surface of the to-be-searched path; or
    information that indicates a location of the reflective surface of the to-be-searched path.

6. The method according to any one of claims 1 to 5, wherein the method further comprises:

    obtaining, by the first apparatus, second configuration information, wherein the second configuration information indicates that a second signal is associated with a spatial relation of a first path, and the second configuration information further indicates that a third signal is associated with a spatial relation of a second path; and
    sending, by the first apparatus, the second signal and the third signal based on the second configuration information.

7. A positioning method, wherein the method is applied to a location management apparatus, and the method comprises:

receiving, by the location management apparatus, first information, wherein the first information is determined based on measurement results of a plurality of paths of at least one first signal, and the first information comprises information that indicates reflective surfaces of the plurality of paths; and
determining, by the location management apparatus, location information of a to-be-positioned apparatus based on the first information.

8. The method according to claim 7, wherein the information that indicates the reflective surfaces of the plurality of paths comprises at least one of the following:

information that indicates a type of the reflective surface of the path;
information that indicates a material of the reflective surface of the path;
information that indicates a reflectivity of the reflective surface of the path;
information that indicates reflected energy of the reflective surface of the path;
information that indicates a surface feature of the reflective surface of the path;
information that indicates a direction of the reflective surface of the path; or
information that indicates a location of the reflective surface of the path.

9. The method according to claim 7 or 8, wherein before receiving, by the location management apparatus, the first information, the method further comprises:
sending, by the location management apparatus, first configuration information, wherein the first configuration information comprises information about a reflective surface of a to-be-searched path.

10. The method according to claim 9, wherein the information about the reflective surface of the to-be-searched path comprises at least one of the following:

information that indicates a type of the reflective surface of the to-be-searched path;
information that indicates a material of the reflective surface of the to-be-searched path;
information that indicates a reflectivity of the reflective surface of the to-be-searched path;
information that indicates reflected energy of the reflective surface of the to-be-searched path;
information that indicates a surface feature of the reflective surface of the to-be-searched path;
information that indicates a direction of the reflective surface of the to-be-searched path; or
information that indicates a location of the reflective surface of the to-be-searched path.

11. The method according to any one of claim 7 to 10, wherein after receiving, by the location management apparatus, the first information, the method further comprises:

sending, by the location management apparatus, second information based on the first information, wherein the second information comprises fourth information and/or the information that indicates the reflective surfaces of the plurality of paths; and
the fourth information indicates that a second signal is associated with a spatial relation of a first path, and the fourth information further indicates that a third signal is associated with a spatial relation of a second path.

12. A positioning method, wherein the method is applied to a second apparatus, and the method comprises:
receiving, by the second apparatus, second information, wherein the second information is obtained based on measurement results of a plurality of paths of at least one first signal received by a first apparatus; and sending, by the second apparatus, second configuration information based on the second information, wherein the second configuration information indicates that a second signal is associated with a spatial relation of a first path, the second configuration information further indicates that a third signal is associated with a spatial relation of a second path, and the second configuration information is used by the first apparatus to send the second signal and the third signal.

13. The method according to claim 12, wherein the second information comprises:

information that indicates reflective surfaces of the plurality of paths; and/or

fourth information, wherein the fourth information indicates that the second signal is associated with the spatial relation of the first path, and the fourth information further indicates that the third signal is associated with the spatial relation of the second path.

14. A positioning apparatus, wherein the apparatus comprises a processor and an interface circuit; and the processor is configured to:

receive at least one first signal through the interface circuit; and
determine first information based on measurement results of a plurality of paths of the at least one first signal, wherein the first information comprises information that indicates reflective surfaces of the plurality of paths.

15. The apparatus according to claim 14, wherein the information that indicates the reflective surfaces of the plurality of paths comprises at least one of the following:

information that indicates a type of the reflective surface of the path;
information that indicates a material of the reflective surface of the path;
information that indicates a reflectivity of the reflective surface of the path;
information that indicates reflected energy of the reflective surface of the path;
information that indicates a surface feature of the reflective surface of the path;
information that indicates a direction of the reflective surface of the path; or
information that indicates a location of the reflective surface of the path.

16. The apparatus according to claim 14 or 15, wherein the interface circuit is further configured to:
send the first information.

17. The apparatus according to any one of claims 14 to 16, wherein

the interface circuit is further configured to:
receive first configuration information, wherein the first configuration information comprises information about a reflective surface of a to-be-searched path; and
the processor is further configured to:
measure the at least one first signal based on the first configuration information, to obtain the measurement results of the plurality of paths of the at least one first signal.

18. The apparatus according to claim 17, wherein the information about the reflective surface of the to-be-searched path comprises at least one of the following:

information that indicates a type of the reflective surface of the to-be-searched path;
information that indicates a material of the reflective surface of the to-be-searched path;
information that indicates a reflectivity of the reflective surface of the to-be-searched path;
information that indicates reflected energy of the reflective surface of the to-be-searched path;
information that indicates a surface feature of the reflective surface of the to-be-searched path;
information that indicates a direction of the reflective surface of the to-be-searched path; or
information that indicates a location of the reflective surface of the to-be-searched path.

19. The apparatus according to any one of claims 14 to 18, wherein the processor is further configured to:

obtain second configuration information, wherein the second configuration information indicates that a second signal is associated with a spatial relation of a first path, and the second configuration information further indicates that a third signal is associated with a spatial relation of a second path; and
send the second signal and the third signal based on the second configuration information through the interface circuit.

20. A positioning apparatus, wherein the apparatus comprises a processor and an interface circuit; and the processor is configured to:

receive first information through the interface circuit, wherein the first information is determined based on measurement results of a plurality of paths of at least one first signal, and the first information comprises information that indicates reflective surfaces of the plurality of paths; and
determine location information of a to-be-positioned apparatus based on the first information.

21. The apparatus according to claim 20, wherein the information that indicates the reflective surfaces of the plurality of paths comprises at least one of the following:

information that indicates a type of the reflective surface of the path;
information that indicates a material of the reflective surface of the path;
information that indicates a reflectivity of the reflective surface of the path;
information that indicates reflected energy of the reflective surface of the path;
information that indicates a surface feature of the reflective surface of the path;
information that indicates a direction of the reflective surface of the path; or
information that indicates a location of the reflective surface of the path.

22. The apparatus according to claim 20 or 21, wherein the interface circuit is further configured to:
send first configuration information, wherein the first configuration information comprises information about a reflective surface of a to-be-searched path.

23. The apparatus according to claim 22, wherein the information about the reflective surface of the to-be-searched path comprises at least one of the following:

information that indicates a type of the reflective surface of the to-be-searched path;
information that indicates a material of the reflective surface of the to-be-searched path;
information that indicates a reflectivity of the reflective surface of the to-be-searched path;
information that indicates reflected energy of the reflective surface of the to-be-searched path;
information that indicates a surface feature of the reflective surface of the to-be-searched path;
information that indicates a direction of the reflective surface of the to-be-searched path; or
information that indicates a location of the reflective surface of the to-be-searched path.

24. The apparatus according to any one of claims 20 to 23, wherein the processor is further configured to:

send second information based on the first information through the interface circuit, wherein
the second information comprises fourth information and/or the information that indicates the reflective surfaces of the plurality of paths; and
the fourth information indicates that a second signal is associated with a spatial relation of a first path, and the fourth information further indicates that a third signal is associated with a spatial relation of a second path.

25. A positioning apparatus, wherein the apparatus comprises a processor and an interface circuit; and
the processor is configured to:

receive second information through the interface circuit, wherein the second information is obtained based on measurement results of a plurality of paths of at least one first signal received by a first apparatus; and
send second configuration information based on the second information through the interface circuit, wherein the second configuration information indicates that a second signal is associated with a spatial relation of a first path, the second configuration information further indicates that a third signal is associated with a spatial relation of a second path, and the second configuration information is used by the first apparatus to send the second signal and the third signal.

26. The apparatus according to claim 25, wherein the second information comprises:

information that indicates reflective surfaces of the plurality of paths; and/or
fourth information, wherein the fourth information indicates that the second signal is associated with the spatial relation of the first path, and the fourth information further indicates that the third signal is associated with the spatial relation of the second path.

27. A communication apparatus, comprising a processing unit and a communication unit, wherein the processing unit is configured to perform the method according to any one of claims 1 to 13 through the communication unit.

28. A computer-readable storage medium, wherein the computer-readable storage medium stores computer-executable instructions; and when the computer-executable instructions are invoked by a computer, the method according to any one of claims 1 to 13 is performed.

29. A chip system, wherein the chip system comprises at least one processor and an interface circuit, the interface circuit and the at least one processor are interconnected through a line, and the processor runs instructions to perform the method according to any one of claims 1 to 13.

30. A computer program product, wherein the computer program product stores a computer program, the computer program comprises program instructions, and when the program instructions are executed by a computer, the method according to any one of claims 1 to 13 is performed.

FIG. 1

FIG. 2A

FIG. 2B

FIG. 2C

FIG. 2D

Location
management
apparatus

Information about a
measurement result

Third apparatus

Second
apparatus

Configuration
information

Transmit a signal
used for positioning

First apparatus

FIG. 2E

$\theta$

$\theta$

d

FIG. 3

FIG. 4

501: At least one first signal

502: Determine first information based on measurement results of a plurality of paths of the at least one first signal

503: First information

504: Determine location information of a to-be-positioned apparatus based on the first information

FIG. 5

FIG. 6

| Second apparatus | Third apparatus | First apparatus | Location management apparatus |
|---|---|---|---|

701: First configuration information

702: At least one first signal

703: Measure the at least one first signal based on the first configuration information, to obtain measurement results of a plurality of paths of the at least one first signal

704: Determine first information based on the measurement results of the plurality of paths of the at least one first signal

705: First information

706: Second information

707: Second configuration information

708: Second signal and third signal

709: Determine third information based on a measurement result of the second signal and a measurement result of the third signal

710: Third information

711: Determine location information of a to-be-positioned apparatus based on the first information and the third information

FIG. 7

| Base station (second apparatus and third apparatus) | | Terminal (first apparatus) | LMF (location management apparatus) |
|---|---|---|---|

801: The LMF exchanges reference signal configuration information with the base station

802: The LMF performs positioning capability exchange with the terminal

803: LPP provide assistance data message

804: LPP request location information

805: At least one first signal

806: Measure the at least one first signal based on first configuration information, to obtain measurement results of a plurality of paths of the at least one first signal

807: Determine first information based on the measurement results of the plurality of paths of the at least one first signal

808: LPP provide location information message

809: NRPPa positioning information request

810: Reference signal configuration information

811: NRPPa positioning information response

812: NRPPa positioning activation request

813: Message used to activate reference signal transmission

814: NRPPa positioning activation response

815: NRPPa measurement request

816: Second signal and third signal

817: Determine third information based on a measurement result of the second signal and a measurement result of the third signal

818: NRPPa measurement response

819: Determine location information of a to-be-positioned apparatus based on the first information and the third information

820: NRPPa positioning deactivation message

FIG. 8

| Base station (second apparatus and third apparatus) | | Terminal (first apparatus) | LMF (location management apparatus) |

901: The LMF exchanges reference signal configuration information with the base station

902: The LMF performs positioning capability exchange with the terminal

903: NRPPa positioning information request

904: Reference signal configuration information

905: NRPPa positioning information response

906: NRPPa positioning activation request

907: Message used to activate reference signal transmission

908: NRPPa positioning activation response

909: NRPPa measurement request

910: LPP provide assistance data message

911: LPP request location information

912: At least one first signal

913: Measure the at least one first signal, to obtain measurement results of a plurality of paths of the at least one first signal

914: Second signal and third signal

915: Determine third information based on a measurement result of the second signal and a measurement result of the third signal

916: Determine first information based on the measurement results of the plurality of paths of the at least one first signal

917: LPP provide location information message

918: NRPPa measurement response

919: Determine location information of a to-be-positioned apparatus based on the first information and the third information

920: NRPPa positioning deactivation message

FIG. 9

Communication apparatus
1300

Processing unit 1310

Transceiver unit 1320

FIG. 10

Communication apparatus 1400

Processor 1410

Interface circuit
1420

Memory 1430

FIG. 11

## INTERNATIONAL SEARCH REPORT

International application No.

**PCT/CN2024/107268**

| A. | CLASSIFICATION OF SUBJECT MATTER |
|---|---|

H04W 4/02(2018.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VEN, WOTXT, EPTXT, USTXT, CNKI, 3GPP: 定位, 信号, 径, 测量结果, 反射面, 配置信息, 空间关系, 关联, location, signal, path, measuring result, reflector, configuration information, spatial relationship, relevance

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114501524 A (HUAWEI TECHNOLOGIES CO., LTD.) 13 May 2022 (2022-05-13) description, paragraphs [0074]-[0178] | 1-11, 14-24, 27-30 |
| X | CN 116491074 A (INTERDIGITAL PATENT HOLDINGS, INC.) 25 July 2023 (2023-07-25) description, paragraphs [0084]-[0183] | 12, 13, 25, 26-30 |
| A | CN 113840224 A (HUAWEI TECHNOLOGIES CO., LTD.) 24 December 2021 (2021-12-24) entire document | 1-30 |
| A | CN 115567866 A (HUAWEI TECHNOLOGIES CO., LTD.) 03 January 2023 (2023-01-03) entire document | 1-30 |
| A | JP 2016118509 A (ALPS ELECTRIC CO., LTD.) 30 June 2016 (2016-06-30) entire document | 1-30 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 October 2024** | **22 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT

Information on patent family members

| Patent document cited in search report | | | Publication date (day/month/year) | Patent family member(s) | | | Publication date (day/month/year) |
|---|---|---|---|---|---|---|---|
| CN | 114501524 | A | 13 May 2022 | None | | | |
| CN | 116491074 | A | 25 July 2023 | EP | 4229431 | A1 | 23 August 2023 |
| | | | | US | 2023388959 | A1 | 30 November 2023 |
| | | | | TW | 202222086 | A | 01 June 2022 |
| | | | | WO | 2022081630 | A1 | 21 April 2022 |
| CN | 113840224 | A | 24 December 2021 | None | | | |
| CN | 115567866 | A | 03 January 2023 | None | | | |
| JP | 2016118509 | A | 30 June 2016 | JP | 6359443 | B2 | 18 July 2018 |

International application No.

**PCT/CN2024/107268**

Form PCT/ISA/210 (patent family annex) (July 2022)

**REFERENCES CITED IN THE DESCRIPTION**

**Patent documents cited in the description**

- CN 202311021975